Europäisches Patentamt

European Patent Office

Office européen des brevets

(19)

(11) **EP 0 834 235 B1**

# (12) FASCICULE DE BREVET EUROPEEN

(45) Date de publication et mention
de la délivrance du brevet:
**24.02.1999 Bulletin 1999/08**

(21) Numéro de dépôt: **96924001.9**

(22) Date de dépôt: **21.06.1996**

(51) Int Cl.6: **H04N 13/00**

(86) Numéro de dépôt international:
**PCT/FR96/00969**

(87) Numéro de publication internationale:
**WO 97/01250 (09.01.1997 Gazette 1997/03)**

## (54) PROCEDE ET SYSTEME D'ACQUISITION D'IMAGES AUTOSTEREOSCOPIQUES

VERFAHREN UND EINRICHTUNG ZUR AUFNAHME STEREOSKOPISCHER BILDER

METHOD AND APPARATUS FOR PICKING UP AUTOSTEREOSCOPIC IMAGES

(84) Etats contractants désignés:
**DE ES FR GB IT NL PT SE**

(30) Priorité: **22.06.1995 FR 9507480**

(43) Date de publication de la demande:
**08.04.1998 Bulletin 1998/15**

(73) Titulaire: **ALLIO, Pierre**
**F-75020 Paris (FR)**

(72) Inventeur: **ALLIO, Pierre**
**F-75020 Paris (FR)**

(74) Mandataire: **Jacquard, Philippe Jean-Luc**
**CABINET ORES,**
**6, Avenue de Messine**
**75008 Paris (FR)**

(56) Documents cités:
EP-A- 0 146 476        EP-A- 0 641 132
EP-A- 0 650 301        WO-A-91/06185

• **FERNSEH UND KINOTECHNIK, vol. 44, no. 10, 1 Janvier 1990, pages 556-558, 560 - 562, 564, XP000171792 BOERNER R: "AUTOSTEREOSKOPISCHE 3D-SYSTEME MIT ZWISCHENBILDERN IN LINSENRASTERGROSSBILDSCHIRMEN INTEROKULARE ZWISCHENBILDER UND DAS SPRINGEN DISKRETER STEREOPERSPEKTIVEN ("FLIPPING") IN PARALLAX-PANORAMASTEREOGRAMMEN"**
• **ONDE ELECTRIQUE, vol. 71, no. 1, 1 Janvier 1991, pages 26-32, XP000207701 ALLIO P ET AL: "ALIOSCOPIE PROCEDE POUR LA PRISE DE VUE VIDEO OU LA SYNTHESE D'IMAGES EN RELIEF ET LA VISUALISATION SANS LUNETTES" cité dans la demande**

## Description

La présente invention a pour objet un procédé d'acquisition d'images vidéo autostéréoscopiques simulées.

On trouve actuellement sur le marché de nombreux logiciels de conception assistée par ordinateur (CAO) qui permettent de mémoriser des données correspondant à des informations à trois dimensions d'objets ou d'une scène à observer. Ces logiciels incorporent des moyens de traitement permettant seulement de visualiser sur un écran une image plate en perspective de l'objet ou de la scène, selon des angles d'observation qui peuvent être choisis à volonté.

Des procédés de simulation stéréoscopiques à deux points de vue ont été proposés, par exemple dans les Demandes de Brevet européen EP-125 480 (HONEYWELL) et EP-172 110 (GIRAVIONS DORAND), mais ils mettent en oeuvre la mémorisation de demi-images stéréoscopiques et ne sont donc pas utilisables avec les logiciels précités.

Le Demandeur a développé un système vidéo autostéréoscopique à plus de deux images élémentaires appelées également points de vue, présentant typiquement un nombre n de points de vue égal à 4, et est titulaire de plusieurs Brevets ou Demandes de Brevet concernant en particulier un dispositif de prise de vue vidéo autostéréoscopique, à savoir en particulier les Brevets français 87 11764 (FR-2 619 664), 93 05381 (FR-2 705 007) et 93 05383 (FR-2 704 951).

Ce système vidéo autostéréoscopique permet à un observateur de voir, sans lunettes spéciales, des images en relief sur un écran équipé d'un sélecteur optique tel qu'un réseau lenticulaire, et ce, dans des bonnes conditions de confort visuel, étant donné que l'observateur n'est pas astreint à une position de visualisation précise.

Les termes "ligne" et "colonne" désignent respectivement les rangées horizontales et les rangées verticales de pixels vues par un observateur debout ou assis, indépendamment par exemple de la direction de balayage, horizontale ou verticale, d'un tube cathodique de visualisation. Par exemple, pour un écran cathodique dont les lignes de balayage sont disposées verticalement, on considérera ces "lignes de balayage" comme des colonnes.

Il n'existe pas actuellement de solution technique permettant de simuler une visualisation en relief, dans les conditions de confort visuel que permet l'autostéréoscopie à plus de deux points de vue, des données mémorisées telles que définies ci-dessus.

Les caméras autostéréoscopiques mettent en oeuvre un réseau lenticulaire, en général cylindrique, dont la simulation ne peut conduire qu'à une modélisation extrêmement compliquée nécessitant une puissance de calcul importante, adaptée à la génération d'une image complexe comprenant une pluralité de points de vue imbriqués respectant les paramètres de l'autostéréoscopie. Une telle modélisation a été envisagée dans l'Article de Pierre ALLIO intitulé "Procédé pour la prise de vue vidéo ou la synthèse d'images en relief et la visualisation en relief" publié dans l'Onde Electrique, vol. 71, n° 1, p. 26 à 32, 1er Janvier 1991 - Paris. La modélisation envisagée dans cet Article implique la mise en oeuvre d'une version spécialement modifiée d'un logiciel (Turbo CAD 3D), impliquant l'élaboration de formes vectorielles visualisées en quasi-temps réel pour calculer des images en temps réel, ou pour réaliser des films en images de synthèse animées (mais pas en temps réel).

Le problème posé par la présente invention est donc a priori difficile à résoudre, et les solutions envisageables semblent a priori exclure des applications en dehors du laboratoire.

L'idée de base de l'invention est que, de manière surprenante, il est possible de simuler une caméra autostéréoscopique, caméra unique du type précité, par une pluralité de caméras élémentaires, c'est-à-dire par un système de prise de vue qui n'est pas par définition autostéréoscopique et qui pose normalement de gros problèmes de mise en oeuvre pratique, même dans le cas où il n'y a que deux caméras et donc deux points de vue, par exemple dans le cas du système connu sous la dénomination "IMAX 3D", et qui s'avère extrêmement complexe lorsque le nombre de points de vue est supérieur à 2.

Un autre dispositif à deux caméras est connu de IEEE 1988 INTERNATIONAL CONFERENCE ON CONSUMER ELECTRONICS, Rosemont, 8 Juin 1988, p. 178-179 - Shinichi Yamaguchi "Stereoscopic video Movie Camera 3D-CAM".

Ce document concerne une caméra de prise de vue stéréoscopique "3D-CAM" à deux points de vue, qui sont ensuite affichés en alternance sur un écran, la visualisation s'effectuant à l'aide de lunettes équipées d'obturateurs à cristaux liquides commandés de manière à transmettre une image en alternance à l'oeil gauche ou à l'oeil droit.

Ce document concerne un dispositif de prise de vue (et non de simulation) et il ne présente que deux points de vue, configuration dans laquelle les problèmes liés à l'autostéréoscopie ne se posent pas et dans laquelle l'observateur doit avoir des lunettes faute de quoi il est condamné à rester à une position fixe par rapport à l'écran.

Encore un autre dispositif à deux caméras est connu de IEEE TRANSACTIONS ON CONSUMER ELECTRONICS, vol. 37, n° 1, 1er février 1991, p. 39-43 - Yasuo Takemura "Stereoscopic video movie camera using 300K Pixel IT-CCD Sensors". Ce dispositif implique lors de la visualisation, le port de lunettes équipées d'obturateurs à cristaux liquides.

La Demande de Brevet Européen EP-641 132 (MATSUSHITA) a pour objet un dispositif de prise de vue à deux caméras dans lequel l'angle entre les caméras est déterminé de manière à permettre la fusion binoculaire pour le point situé le plus près. Ce dispositif de prise de vue à deux points de vue (et non de simulation) ne saurait prendre en compte le problème spécifique lié au cas de l'autostéréoscopie à trois points de vue et plus.

Une simulation est rendue possible, selon l'invention, par une prise en compte appropriée des paramètres physiques, optiques et perceptifs d'un système autostéréoscopique à plus de deux points de vue.

La présente invention a ainsi pour objet un procédé d'acquisition d'images autostéréoscopiques simulées qui ne nécessite pas de calculs compliqués.

Un autre objet de l'invention est un procédé qui permette, à partir d'une base de données standard contenant des images vidéo de synthèse comportant des informations à trois dimensions, de générer des images autostéréoscopiques permettant une visualisation en relief sur un écran équipé d'un réseau tel qu'un réseau lenticulaire, sans nécessiter la réalisation d'un logiciel dédié, ou la modification d'un logiciel existant.

Un autre objet de l'invention est un procédé qui permette de simuler des images animées en temps réel ou quasi-réel.

Une caméra simulée présente un centre optique par exemple le trou d'un sténopé, et une surface sensible simulée ayant un centre défini comme le point de croisement des diagonales de l'image telle qu'elle sera ensuite visualisée sur un écran.

L'invention concerne ainsi un procédé d'acquisition d'images autostéréoscopiques simulées caractérisé en ce qu'il met en oeuvre, à partir de données mémorisées comportant des informations à trois dimensions d'un objet ou de la scène à visualiser sur un écran de visualisation, n caméras simulées, avec $n \geq 3$, générant chacune une image de ladite scène, chacune desdites images constituant un point de vue d'une image autostéréoscopique, les caméras simulées étant équidistantes et séparées d'une même distance inter-caméras $\underline{b}$ qui reste constante pendant une prise de vue, les caméras simulées ayant un angle de champ constant et chacune des caméras simulées présentant un axe passant par son centre optique et un point dit de mise au point simulée, situé à une même distance D' desdites caméras simulées, en ce que la scène à visualiser présente un point le plus proche $P_p$ et un point le plus éloigné $P_e$, et en ce que l'on choisit d'une part la distance $D_{min}$ entre les caméras simulées et le point le plus proche $P_p$, et d'autre part la distance inter-caméras $\underline{b}$ de telle sorte que, pour ladite prise de vue et pour une mise au point variant entre le point le plus proche $P_p$ et le point le plus éloigné $P_e$, l'angle $2\alpha$ entre lesdits axes de deux caméras simulées adjacentes varie entre une valeur au plus égale à 4,5° pour le point $P_p$ et une valeur au moins égale à 0,2° pour le point $P_e$.

Ce procédé qui peut être mis en oeuvre dans le cadre d'un système autostéréoscopique à plus de deux points de vue, correspond à une profondeur normale du champ stéréoscopique, notion distincte de la profondeur de champ classique d'un objectif de prise de vue et qui sera explicitée dans la suite de la description.

Cette notion de profondeur du champ stéréoscopique est propre à l'autostéréoscopie à plus de deux points de vue, et permet, ainsi qu'il sera montré ci-après, de définir des conditions de perception satisfaisante du relief.

Selon une variante particulièrement avantageuse, permettant une perception naturelle du relief s'étendant jusqu'à l'infini, le procédé est caractérisé en ce que, pour une scène comportant un point $P_e$ situé à l'infini, on choisit la distance inter-caméras $\underline{b}$ pour que, l'angle $2\alpha$ ayant une valeur égale à 0,2°, le point de mise au point simulée soit situé à une distance $D_{max}$ telle que l'image d'un objet se déplaçant de la distance $D_{max}$ à l'infini le long de la bissectrice desdits axes de deux caméras simulées extrêmes se déplace sur l'écran de visualisation d'une distance au plus égale à $n^2$ fois le pas des pixels, ceci correspondant à n lentilles sur l'écran de visualisation, chaque lentille couvrant n pixels.

Un mode de réalisation particulièrement avantageux du procédé selon l'invention concernant le cas d'une augmentation du nombre de points de vue par création de points de vue intermédiaires supplémentaires sans changer la base stéréoscopique ni l'angle solide de visualisation, plus particulièrement exploitable dans un contexte de haute définition, avec un nombre de points de vue supérieur à quatre, permet d'obtenir une plus grande profondeur du champ stéréoscopique, qui permet à son tour à l'observateur de disposer, toutes choses égales par ailleurs, d'une plus grande latitude de déplacement face à un écran de visualisation. Le procédé selon ce mode de réalisation préféré est caractérisé en ce qu'il met en oeuvre à partir de données mémorisées comportant des informations à trois dimensions de la scène à visualiser sur un écran de visualisation, n caméras simulées, avec $n > 4$, générant chacune une image de ladite scène, les caméras simulées étant équidistantes et séparées d'une même distance inter-caméras $\underline{b}$ qui reste constante pendant une prise de vue, les caméras simulées ayant un angle de champ constant, chacune des caméras simulées présentant un axe passant par son centre optique et un point dit de mise au point simulée, situé à une même distance D' desdites caméras simulées, en ce que la scène à visualiser présente un point le plus proche $P_p$ et un point le plus éloigné $P_e$, et en ce que l'on choisit d'une part la distance $D_{min}$ entre les caméras simulées et le point le plus proche $P_p$, et d'autre part la distance inter-caméras $\underline{b}$ de telle sorte que, pour ladite prise de vue, et pour une mise au point variant entre le point le plus proche $P_p$ et le point le plus éloigné $P_e$, l'angle $2\alpha$ entre lesdits axes de deux caméras simulées adjacentes varie entre une valeur au plus égale à $(18/n)°$ pour le point $P_p$ et une valeur au moins égale à $(0,8/n)°$ pour le point $P_e$.

Selon une variante particulièrement avantageuse permettant une perception naturelle du relief s'étendant jusqu'à l'infini, le procédé est caractérisé en ce que, pour une scène comportant un point $P_e$ situé à l'infini, on choisit la distance inter-caméras $\underline{b}$ pour que l'angle $2\alpha$ ayant une valeur égale à $(0,8/n)°$, le point de mise au point simulée soit situé à une distance $D_{max}$ telle que l'image d'un objet se déplaçant de la distance $D_{max}$ à l'infini, le long de la bissectrice dedits axes de deux caméras simulées extrêmes, se déplace sur l'écran de visualisation d'une distance au plus égale à $n^2$ fois le pas des pixels, d'où il résulte à la fois une sensation de mouvement continu entre les points de vue jusqu'à l'infini et une netteté de l'image.

Le procédé selon l'invention permet ainsi de réaliser une simulation particulièrement simple, ce qui est paradoxal, étant donné qu'il est bien connu que les systèmes stéréoscopiques à plusieurs caméras sont particulièrement compliqués et difficiles à mettre en oeuvre, même lorsqu'ils se limitent à deux points de vue et à deux caméras.

Lesdits axes peuvent être les axes optiques des caméras simulées.

Selon un mode de réalisation préféré, les caméras simulées ont leurs surfaces sensibles simulées parallèles entre elles et disposées sensiblement dans un même plan.

Selon un mode de réalisation particulièrement avantageux, le procédé est caractérisé en ce que les caméras simulées sont du type à sténopé.

Chaque image élémentaire peut être directement obtenue dans le format anamorphosé correspondant à l'autostéréoscopie visualisée sur un écran de télévision devant lequel est placé un réseau lenticulaire, en affectant à chaque point image de la caméra simulée une résolution verticale égale à la résolution verticale de l'image vidéo et une résolution horizontale égale à la résolution horizontale de l'image vidéo divisée par le nombre $\underline{n}$ de points de vue. Il suffit ensuite d'imbriquer les images élémentaires obtenues pour obtenir une image autostéréoscopique simulée visualisable sur un écran de télévision.

Selon l'invention, il est également possible d'obtenir un effet de changement apparent de dimension d'un objet ou d'une scène sans perturber sa géométrie à partir d'une mise au point à ladite distance D' par déplacement des caméras simulées par rapport audit objet sans changer le point de mise au point ni l'angle $2\alpha$, et en modifiant la valeur de b en proportion de la modification de la distance de mise au point.

Selon un mode de réalisation préféré, le procédé est caractérisé en ce que l'image comporte des couples stéréoscopiques ayant une base stéréoscopique donnée B, les points de vue dudit couple stéréoscopique étant séparés par m points de vue intermédiaires, avec m entier $\geq$ 1. Il peut comporter une étape de visualisation dans des conditions où, à la distance théorique dite de la "teinte plate", un observateur voit un dit couple stéréoscopique dont les points de vue sont séparés par m points de vue élémentaires.

L'invention concerne également un système vidéo autostéréoscopique caractérisé en ce qu'il comporte :

- un dispositif d'acquisition d'images vidéo autostéréoscopiques simulées d'une scène à visualiser comportant une base de données comportant des données mémorisées comportant des informations à trois dimensions d'un objet ou de la scène à visualiser sur un écran de visualisation, un dispositif de génération de n caméras simulées, avec n $\geq$ 3, générant chacune une image de ladite scène, les caméras simulées étant équidistantes et séparées d'une même distance inter-caméras b qui reste constante pendant une prise de vue avec un angle de champ constant et chacune présentant un axe passant par son centre optique et un point dit de mise au point simulée, situé à une même distance D' desdites caméras simulées, la scène à visualiser présentant un point le plus proche $P_p$ et un point le plus éloigné $P_e$, ledit dispositif de génération de n caméras simulées présentant un paramétrage tel que d'une part la distance $D_{min}$ entre l'ensemble des caméras simulées et le point le plus proche $P_p$ et d'autre part la distance inter-caméras b répondent à la condition selon laquelle, pour ladite prise de vue et pour une mise au point variant entre le point le plus proche $P_p$ et le point le plus éloigné $P_e$, l'angle $2\alpha$ entre lesdits axes de deux caméras simulées adjacentes varie entre une valeur au plus égale à 4,5° pour le point $P_p$ et une valeur au moins égale à 0,2° pour le point $P_e$ ;
- un dispositif de visualisation dans lequel un observateur voit, à la distance théorique de la "teinte plate", un couple stéréoscopique comportant deux points de vue séparés par m points de vue intermédiaires, avec m supérieur ou égal à 1.

Ce système peut être caractérisé en ce que le dispositif de génération de n caméras simulées présente un paramétrage tel que, pour une scène comportant un point $P_e$ situé à l'infini, la distance inter-caméras $\underline{b}$ soit telle que, l'angle $2\alpha$ ayant une valeur égale à 0,2°, le point de mise au point simulé soit situé à une distance $D_{max}$ telle que l'image d'un objet se déplaçant à la distance $D_{max}$ à l'infini le long de la bissectrice desdits axes de deux caméras simulées extrêmes se déplace sur l'écran de visualisation d'une distance au plus égale à $n^2$ fois le pas des pixels.

L'invention concerne également un système permettant une augmentation du nombre de points de vue par création de points de vue intermédiaires supplémentaires, caractérisé en ce qu'il comporte :

- un dispositif d'acquisition d'images stéréoscopiques simulées d'un objet ou d'une scène à visualiser, comportant une base de données comprenant des données mémorisées comportant des informations à trois dimensions de l'objet ou de la scène à visualiser sur un écran de visualisation, un dispositif de génération de $\underline{n}$ caméras simulées, avec $\underline{n}$ > 4, générant chacune une image de ladite scène, les caméras simulées étant équidistantes et séparées d'une même distance inter-caméras $\underline{b}$ qui reste constante pendant une prise de vue, et chacune des caméras simulées présentant un axe passant par son centre optique et un point dit de mise au point simulée, situé à une même distance D' desdites caméras simulées, la scène à visualiser présentant un point le plus proche $P_p$ et un point le plus éloigné $P_e$, et ledit dispositif de génération présentant un paramétrage tel que d'une part la distance $D_{min}$ entre les caméras simulées et le point le plus proche $P_p$, et d'autre part la distance inter-caméras $\underline{b}$ répondent à la condition selon laquelle, pour ladite prise de vue, et pour une mise au point variant entre le point le plus proche $P_p$ et le point le plus éloigné $P_e$, l'angle $2\alpha$ entre lesdits axes de deux caméras simulées adjacentes varie entre une valeur au plus égale à $(18/n)°$ pour le point $P_p$ et une valeur au moins égale à $(0,8/n)°$ pour le point $P_e$ ;

- un dispositif de visualisation dans lequel un observateur voit, à la distance théorique de la "teinte plate", un couple stéréoscopique comportant deux points de vue séparés par m points de vue intermédiaires, avec m supérieur ou égal à 1.

Ce système peut être caractérisé en ce que, le dispositif de génération de n caméras simulées présente un paramétrage tel que, pour une scène comportant un point $P_e$ situé à l'infini, la distance inter-caméras $\underline{b}$ soit telle que, l'angle $2\alpha$ ayant une valeur égale à $(0,8/n)°$, le point de mise au point simulée soit situé à une distance $D_{max}$ telle que l'image d'un objet se déplaçant de la distance $D_{max}$ à l'infini le long de la bissectrice desdits axes de deux caméras simulées extrêmes ($C_1$, $C_4$), se déplace sur l'écran de visualisation d'une distance au plus égale à $n^2$ fois le pas des pixels.

Lesdits axes peuvent être les axes optiques des caméras simulées.

Selon un mode de réalisation préféré, les caméras simulées ont leurs surfaces sensibles simulées parallèles entre elles et disposées sensiblement sur un même plan.

D'autres caractéristiques et avantages de l'invention apparaîtront mieux à la lecture de la description qui va suivre, en liaison avec les dessins ci-annexés dans lesquels :

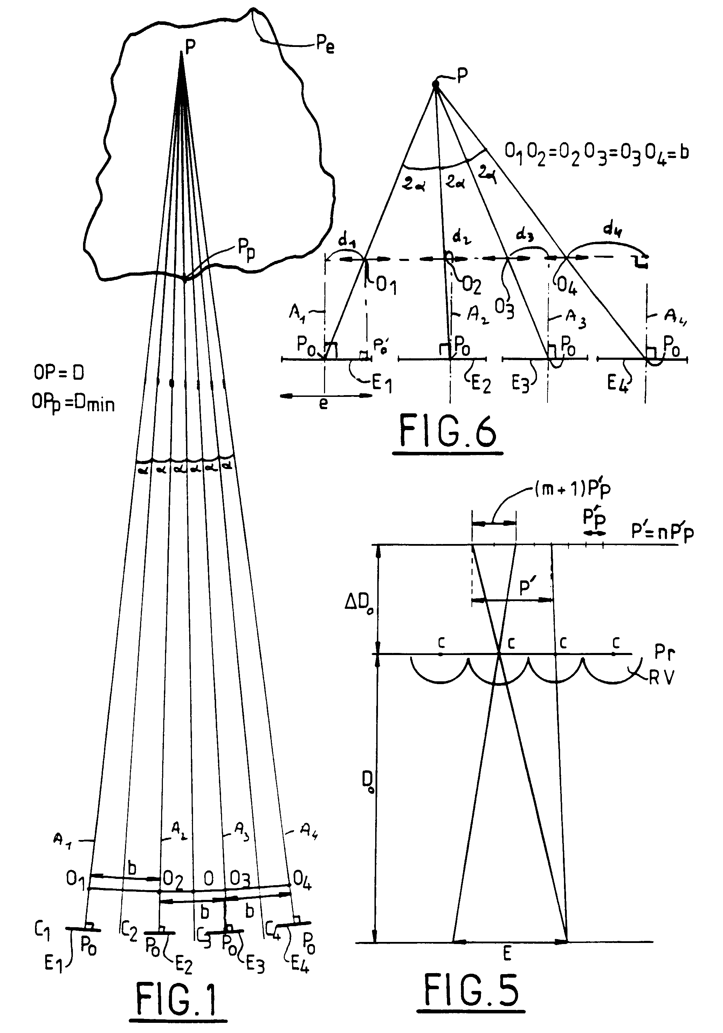

- la figure 1 représente un schéma de mise en oeuvre de l'invention à l'aide de caméras simulées par exemple à sténopé.
- la figure $2\underline{a}$ est un détail de la figure 1 illustrant le cas de caméras à sténopé, la fig. $2\underline{b}$ étant une illustration de l'écran simulé d'une caméra à sténopé selon l'invention.
- les figures $3\underline{a}$ et $3\underline{b}$ illustrent deux cas de recomposition d'une image autostéréoscopique à partir des images élémentaires fournies par les caméras simulées des figures précédentes.
- les figures $4\underline{a}$ à $4\underline{d}$ illustrent quatre variantes avantageuses de l'invention.
- la figure 5 illustre la condition d'autostéréoscopie homogène selon l'invention.
- la figure 6 illustre un mode de réalisation préféré de l'invention.

Pour définir les principes de réalisation d'une image autostéréoscopique en images de synthèse, il faut simuler par le calcul une image complexe que l'on pourrait obtenir avec une caméra décrite dans les Brevets français n° 87 11764 (FR-2 619 664), n° 93 05381 (FR-2 705 007) et n° 93 05383 (FR-2 704 951) du Demandeur.

Selon l'invention, pour créer cette image vidéo complexe, il n'est pas nécessaire d'introduire un réseau lenticulaire si l'on considère l'image désimbriquée obtenue par le traitement décrit dans le Brevet français n° 93 05380 (FR-2 705 006) du Demandeur. L'image ainsi réalisée par le mode dit "$\underline{n}$ images" peut, pour le calcul, être réalisée par des caméras simulées pour peu qu'elles soient positionnées virtuellement d'une certaine manière qui sera décrite ci-après. Les caméras simulées sont avantageusement équivalentes à des caméras munies d'un sténopé. La résolution de la surface sensible peut être anisotrope de sorte que, pour chaque point image ou pixel, la résolution considérée dans le sens vertical est égale à la résolution verticale de l'image finale, et que la résolution norizontale est égale à la résolution horizontale de l'image finale divisée par $\underline{n}$ (nombre de point de vue). Ceci permet une visualisation sur un écran de télévision. Par contre, pour une visualisation par rétro-projection à n projecteurs, la résolution reste isotrope.

En se reportant aux figures 1 et $2\underline{a}$, les n axes optiques principaux $A_1$ à $A_4$ c'est-à-dire les droites passant par le point milieu $P_o$ des surfaces sensibles simulées ($E_1...E_4$) ou équivalentes et perpendiculaires à ces surfaces ($E_1...E_4$), passent par le trou ($O_1...O_4$) du sténopé et se croisent en un seul point P à la distance D de mise au point de la caméra autostéréoscopique simulée C. Les angles ($2\alpha$) formés en partant de ce point unique et les n axes optiques du système simulé, pris deux à deux, sont compris entre deux valeurs limites qui sont définies en fonction des conditions d'observation particulières liées à l'autostéréoscopie à n° points de vue en télévision.

Pour définir les conditions aux limites et la méthode de simulation et/ou de réalisation de ces images autostéréoscopiques, il faut partir du système autostéréoscopique défini ci-dessus et en analyser les caractéristiques.

Dans le système autostéréoscopique envisagé selon l'invention, on crée au moins un point de vue supplémentaire entre les deux points de vue considérés comme ceux que verraient les deux yeux d'un observateur à la distance théorique dite de "la teinte plate" telle que définie ci-après. La cohérence des points de vue entre eux doit être suffisamment proche de celle obtenue par la caméra autostéréoscopique précitée. Il est aussi intéressant d'en créer au moins un supplémentaire latéralement pour permettre les mouvements horizontaux de la tête parallèlement au plan de l'écran, soit en tout quatre points de vue ou plus. L'ensemble de ces points de vue permet de créer un volume global dans lequel l'observateur peut se déplacer et regarder l'écran (notamment dans l'axe perpendiculaire à l'écran) sans perdre la perception du relief. C'est cette propriété qui caractérise l'autostéréoscopie par rapport aux systèmes qui comportent seulement des couples de points de vue stéréoscopiques deux à deux, sans point de vue intermédiaire tels que définis ci-dessus, et qui imposent à l'observateur une position fixe par rapport à l'écran, si la visualisation est réalisée sans lunettes.

Dans un cas réel mettant en oeuvre une caméra correspondant aux Brevets précités du Demandeur, le système a été construit pour permettre la prise de vue et la visualisation de quatre points de vue simultanément sans lunettes, avec une seule caméra au standard PAL CCIR 50 Hertz, un seul objectif et un écran vidéo standard capable d'afficher des images en mode progressif (non entrelacé) si les axes des lentilles du réseau sont placés parallèlement aux lignes de l'image.

Pour une visualisation selon un mode de mise en oeuvre correspondant à un mode de réalisation préféré de la présente invention, on règle en premier lieu la géométrie de l'image pour la mettre en correspondance avec le réseau lenticulaire placé devant l'écran vidéo de sorte que le pas du réseau lenticulaire est sensiblement égal au pas des paquets de quatre pixels, "4" correspondant au nombre de points de vue choisis à la prise de vue dans ce cas particulier, de manière à permettre l'observation par un oeil d'un observateur d'un seul pixel modulo quatre via le réseau lenticulaire à la distance d'observation choisie, qui correspond à la distance théorique de la teinte plate.

Si on suppose que l'observateur ferme un oeil et bouge sa tête parallèlement au plan de l'écran en préservant sa distance à l'image, il doit voir avec cet oeil, défiler successivement tous les points de vue n° 1,2,3,4. Lorsqu'il a vu tous les points de vue, il retrouve à nouveau le point de vue n°1 de telle sorte qu'il verra ensuite en poursuivant son mouvement, successivement les n° de points de vue suivants 1,2,3,4 ; 1,2,3,4 ; 1,2,3,4 ; 1,2,3,4 ; 1,2,3,4 ; etc... En d'autres termes, il s'agit d'un système "modulo" dans lequel les mêmes points de vue sont vus plusieurs fois lorsque l'observateur se déplace parallèlement à l'écran. Chaque paquet de quatre points de vue correspond à un angle de vue qui dépend de la surface image occupée par quatre pixels sur l'écran et de la distance focale du réseau utilisé pour la visualisation. Le pas du réseau lenticulaire disposé devant l'écran doit être légèrement inférieur à celui des paquets de quatre pixels affichés.

Si on désigne par (a), (b), (c), et (d), l'ensemble des pixels de respectivement la première, la deuxième, la troisième et la quatrième de quatre colonnes successives de pixels de l'image vidéo, le point de vue n° 1 comporte tous les pixels (a) de l'image, le n° 2 de tous les pixels (b), le n° 3 de tous les pixels (c) et le n° 4 des pixels (d). A la distance idéale, l'observateur voit avec un oeil tous les pixels (a) et avec l'autre oeil les pixels (b) ou (c) ou (d). La pratique montre qu'il est souhaitable de présenter à la distance nominale de visualisation qui est la distance théorique $l$ de la teinte plate, les couples suivants [(a) et (c)] ou [(b) et (d)]. Si le spectateur se rapproche de l'écran, les limites de l'angle solide se rapprochent, et les deux yeux ayant un écart interpupillaire constant, il perçoit dans ce cas le couple (a) et (d). si le spectateur s'éloigne, les limites de l'angle solide (lobe) s'écartent, et il voit les couples [((a) et (b)] ou [(b) et (c)] ou [(c) et (d)]. Dans le cas réel, le fait d'avoir réalisé la prise de vue avec le système autostéréoscopique constitué d'une seule caméra à réseau lenticulaire et d'un seul objectif, permet à l'observateur de s'éloigner de la distance théorique de la teinte plate (distance choisie au départ) grâce à l'exceptionnelle cohérence des quatre points de vue. En effet, ces quatre points de vue sont aussi cohérents que la multitude d'images contenues simultanément dans une image à forte luminosité et à faible profondeur de champ réalisée avec un objectif très ouvert. Cette propriété existe également dans le cas simulé selon le mode de réalisation préféré de l'invention.

A la distance nominale d'observation (qui est la distance théorique de la teinte plate), l'observateur voit (pour n = 4) un couple stéréoscopique formé selon l'invention par le premier $l_1$ et le troisième $l_3$ points de vue, ou bien par le deuxième $l_2$ et le quatrième points de vue $l_4$. Ce choix de paramètres, selon lequel un couple stéréoscopique est formé non par deux points de vue adjacents, mais par deux points de vue entre lesquels est intercalé un point de vue intermédiaire (ou même m (avec m ≥ 1) points de vue intermédiaires auquel cas, la base stéréoscopique élémentaire entre deux points de vue adjacents, est égale à B/(m + 1)), B désignant la base stéréoscopique choisie, de manière à permettre à un observateur dépourvu de lunettes spéciales de disposer d'un volume de visualisation lui permettant de se déplacer à la fois parallèlement et perpendiculairement à un écran de visualisation, caractérise l'autostéréoscopie homogène au sens de la présente Demande. B peut être choisi inférieur, égal, ou supérieur à l'écart interpupillaire E (65 mm) d'un observateur.

De la sorte, et en se référant à l'exemple précité, un observateur peut se rapprocher ou s'éloigner de l'écran à partir de la distance théorique de la teinte plate ou bien encore se déplacer latéralement sans perdre la vision stéréoscopique.

En effet, une fois l'image figée à l'écran, si le spectateur se rapproche de l'écran de visualisation (qui peut être un écran de projection (par exemple un écran TV) ou de rétro-projection) par rapport à la distance nominale d'observation (ou distance théorique de la teinte plate), la base stéréoscopique effectivement perçue grandit et s'il s'éloigne de l'écran, elle diminue et la sensation globale est constante parce que cette variation de base stéréoscopique compense exactement la variation de sensation de la profondeur liée à la modification des efforts de vergence -efforts musculaires effectués pour mettre en correspondance les deux images rétiniennes afin d'assurer la fusion stéréoscopique nécessaire à la perception du relief- qui accompagnent obligatoirement les déplacements dans le sens perpendiculaire à l'écran.

Lorsque la "teinte plate" a été réglée pour que l'observateur voie les points de vue [($l_1$) et ($l_3$)] ou [($l_2$) et ($l_4$)] et que celui-ci se rapproche suffisamment de l'écran de visualisation, il voit alors les points de vue ($l_1$) et ($l_4$) et il ne peut pas bouger parallèlement à l'écran, comme dans un cas réel où l'on regarde de près. Lorsqu'il s'éloigne de l'écran, il perçoit les points de vue [($l_1$) et ($l_2$)] ou [($l_2$) et ($l_3$)] ou [($l_3$) et ($l_4$)] et il a la possibilité de mouvements importants, d'où résulte pour l'observateur la possibilité de se déplacer dans un volume.

Il en va de même, avec un confort accru dans le cas où m est choisi supérieur à 1.

La figure 5 illustre la condition "de la teinte plate" pour une visualisation sur un écran de télévision. L'image comporte des colonnes de pixels imbriquées. A chaque lenticule du réseau RV de pas $P_r$ correspond n colonnes de pixel de l'écran. Les centres C des lenticules sont distants de $\Delta D_o$ du plan des pixels sur l'écran. Le pas des pixels est $p'_p$. On a P'= $np'_p$. A la distance $D_o$, dite de "teinte plate", on a classiquement :

$$P'/Pr = \frac{D_o + \Delta D_o}{D_o}$$

La condition d'autostéréoscopie homogène (observation à la distance de la "teinte plate" de deux points de vue séparés par m points de vue intermédiaires) est : $\Delta D_o = (m + 1) p'_p D_o/E$, avec m supérieur ou égal à 1.

L'autostéréoscopie homogène est donc un système "modulo" qui permet à un observateur de se déplacer parallèlement et perpendiculairement à un écran en conservant la perception du relief.

Elle se distingue essentiellement de la technique décrite dans l'Article IEEE TRANSACTIONS ON ELECTRON DEVICES, vol. 22, n° 9, Sept. 1975, New York, Y. TSUNODA "Three-Dimensional Color Display by Projection-Type composite Holography", p. 784-785. Ce document concerne un dispositif d'affichage stéréoscopique par holographie composite, comprenant N points de vue.

La prise de vue y est effectuée par balayage angulaire selon N directions espacées d'angles égaux $\theta_o = \theta/(N-1)$, pour élargir l'angle de visualisation total qui devient ainsi égal à $\theta = 40°$, avec par exemple $\theta_o = 4°$ pour N = 11 points de vue. La base stéréoscopique entre deux points de vue adjacents est égale à la distance inter-pupillaire. Il ne s'agit pas d'un système "modulo" dans lequel les mêmes points de vue sont vus plusieurs fois lorsque l'observateur se déplace parallèlement à l'écran. En outre, il n'est pas question de faire varier la valeur de cet angle en fonction de la distance de mise au point, étant donné que $\theta_o$ est choisi comme étant égal à l'ouverture (± 2°) du lobe principal des lentilles du réseau lenticulaire de visualisation. L'observateur doit également rester à une distance de l'écran qui est déterminée à l'avance.

On rappelera que, pour un système stéréoscopique à deux points de vue ou bien un système stéréoscopique présentant des couples d'images stéréoscopiques deux à deux, sans point de vue intermédiaire, une observation sans lunettes spéciales impose à l'observateur une position fixe et très précisément déterminée, et qu'on ne peut permettre à un observateur de se déplacer que s'il porte des lunettes séparatrices spéciales (par exemple verres colorés, ou bien polarisés) ou bien encore des lunettes à cristaux liquides commandées par infrarouge et occultant alternativement l'oeil droit et l'oeil gauche comme dans le procédé IMAX 3D précité.

Pour obtenir des images synthétiques ou des images réelles recombinées selon un mode de réalisation préféré de l'invention, il convient de reproduire des caractéristiques spécifiques de la camera autostéréoscopique, si l 'on veut pouvoir bénéficier des qualités de base de l'autostéréoscopie homogène telle que définie ci-dessus, c'est-à-dire une visualisation sans lunettes spéciales sur un écran, tout en permettant à l'observateur une latitude de déplacement dans un volume important.

Ces conditions constituent, avec les valeurs limites définies ci-après, l'ensemble des principes nécessaires pour l'acquisition d'images autostéréoscopiques simulées pouvant être visualisées sur un écran vidéo selon le mode de réalisation préféré de l'invention.

Quatre paramètres principaux sont à prendre en compte pour calculer en synthèse ou réaliser par recombinaison d'images plates stéréoscopiques deux à deux une image autostéréoscopique :

1) La base stéréoscopique totale disponible, et plus particulièrement, la base stéréoscopique effective (B/(m+1) entre deux points de vue adjacents.

2) La valeur de l'angle (2$\alpha$) entre les axes optiques de deux caméras à sténopé simulées adjacentes. Ces axes convergent en un point de croisement situé à la distance du plan de mise au point simulé ; ce plan de mise au point correspond au plan de l'écran à la visualisation si aucune translation horizontale n'est opérée entre les points de vue sur l'image.

3) La résolution horizontale de l'image complète, et la résolution horizontale de chaque point de vue.
4) L'angle de champ du système de prise de vue simulé.

Selon l'invention, la prise de vue simulée s'effectue avec n caméras simulées, deux caméras adjacentes étant séparées par un écart inférieur à celui des yeux d'un observateur pour une distance d'observation et un volume de scène correspondant à une visualisation sans grandissement ni rétrécissement apparent de la scène visualisée.

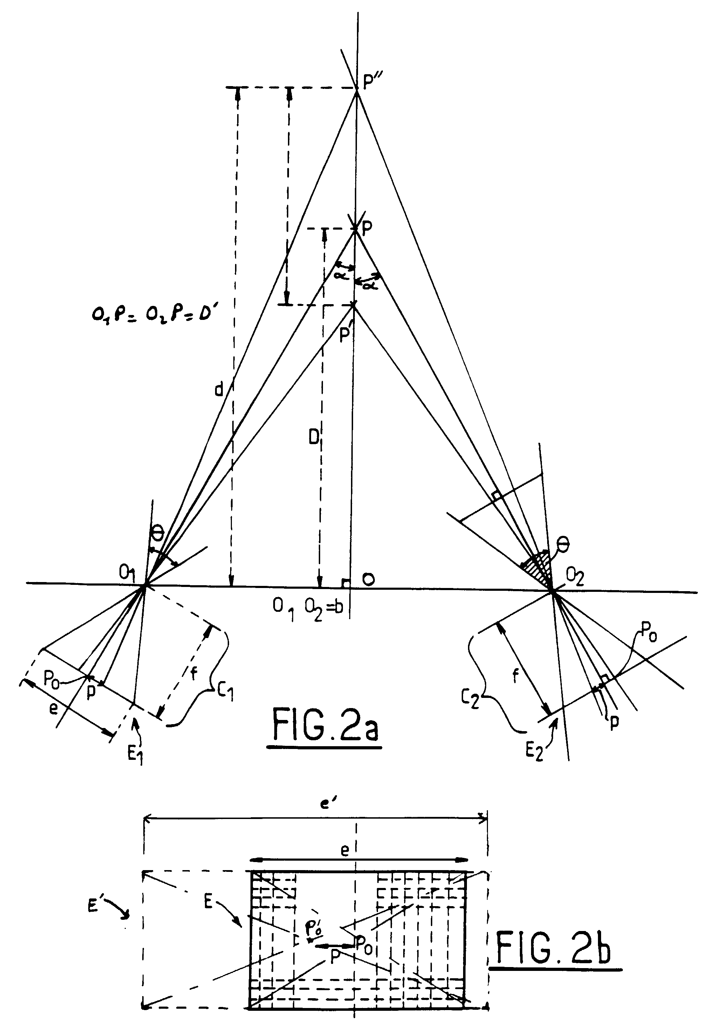

Il faut au moins trois points de vue, le nombre de quatre étant la valeur préférée pour la définition vidéo standard (en PAL, SECAM ou NTSC). Aux figures 1 et 2a, on a envisagé le cas de quatre points de vue, qui sont simulés par quatre caméras à sténopé référencées $C_1$ à $C_4$, présentant chacune un trou de sténopé, respectivement $0_1$ à $0_4$, et une surface sensible ou écran $E_1$ à $E_4$ présentant un centre $P_o$. L'écran $E_1...E_4$ des caméras simulées est situé à une distance f dite distance focale, du trou du sténopé $O_1.. O_4$, et il présente une largeur e. Une telle simulation peut être par exemple effectuée à l'aide du logiciel TURBO CAD 3D commercialisé par la Société HANDSHAKE, par exemple en générant successivement chacune des caméras simulées.

Lorsque l'on considère un système réglé de telle sorte que les distances $D_o$ de la mise au point simulée et de la visualisation réelle (distance effective de la réalisation de la teinte plate) devant l'écran sont égales et que le champ image et la taille de l'écran de visualisation sont tels qu'un objet de 10cm de haut au plan de mise au point a une taille de 10cm sur l'écran, ceci correspondant à un grandissement linéaire égal à 1, il faut que, dans le cas du mode de réalisation préféré (autostéréoscopie homogène) et pour m = 1, la base stéréoscopique simulée entre les deux points de vue visibles simultanément [(a) et (c)] ou [(b) et (d)] à cette distance d'observation soit la plus proche possible de la distance interpupillaire de l'observateur, ou en d'autres termes que la distance entre deux caméras simulées adjacentes soit le plus proche possible de la moitié de la distance interpupillaire de l'observateur. Dans ce cas, la perception du relief est également la même que pour la scène réelle.

Par conséquent, une fois l'image figée à l'écran, si le spectateur se rapproche de l'écran de visualisation par rapport à la distance théorique de la teinte plate, la base stéréoscopique effectivement perçue grandit et s'il s'éloigne de l'écran, elle diminue et la sensation globale est constante parce que cette variation de base stéréoscopique compense exactement la variation de sensation de la profondeur liée à la modification des efforts de vergence -efforts musculaires effectués pour mettre en correspondance les deux images rétiniennes afin d'assurer la fusion stéréoscopique nécessaire à la perception du relief- qui accompagnent obligatoirement les déplacement dans le sens perpendiculaire à l'écran.

Lorsque la "teinte plate" a été réglée pour que l'observateur voit les points de vue [(a) et (c)] ou [(b) et (d)] et que celui-ci se rapproche suffisamment de l'écran de visualisation, il voit alors les points de vue (a) et (d) et il ne peut pas bouger parallèlement à l'écran, comme dans un cas réel où l'on regarde de près. Lorsqu'il s'éloigne de l'écran, il perçoit les points de vue [(a) et (b)] ou [(b) et (c)] ou [(c) et (d)] et il a la possibilité de mouvements importants, d'où résulte pour l'observateur la possibilité de se déplacer dans un volume".

La notion de grandissement est importante, puisqu'elle permet de déterminer la base stéréoscopique nécessaire pour un angle (2α) donné entre deux caméras simulées adjacentes en fonction du volume des scènes à fabriquer ou à reconstituer alors même qu'à l'écran les paramètres de visualisation ne changent pas. De manière surprenante, il est en effet possible de simuler de manière simple des scènes en préservant tous les paramètres à l'exception du rapport de grandeur entre la scène calculée ou reconstituée et la scène perçue sur l'écran. Il faut pour cela adapter la distance inter-caméras pour conserver l'angle (2α) dans certaines limites. Le volume de la scène et la distance d'observation sont automatiquement changés. Ceci conduit à simuler directement des systèmes "macro" et même "micro" et dans l'autre sens des systèmes "hyper", tout en conservant une perception réaliste du relief, les trois dimensions restant dans un rapport tel qu'il ne dépasse pas les capacités de compensation perceptive de l'observateur.

Si on considère maintenant un système donné, et si on change la distance simulée de mise au point, la base stéréoscopique étant constante, c'est l'angle (2 α) entre les points de vue adjacents qui se modifie. Pour un champ image constant, et selon la résolution monoculaire horizontale disponible, il est possible de distinguer des objets éloignés les uns des autres dans le sens de la profondeur selon une certaine résolution qui correspond à la distance à parcourir pour entraîner une modification (ou disparité) observable d'un point de vue par rapport à un autre. Etant donné que l'observateur ne modifie pas sa distance à l'écran au-delà des possibilités déjà décrites, la différence entre la disparité affichée entre les points de vue (disparité plus forte si la distance de la mise au point simulée est inférieure à la distance de l'observateur à l'écran ou plus faible si elle lui est supérieure) se ressent comme une déformation de l'impression de profondeur par rapport à la réalité simulée si un spectateur avait ses yeux à la place de la pupille de l'objectif de la caméra autostéréoscopique simulée. Si la mise au point est trop courte, l'observateur perçoit une exagération de la profondeur. Si la mise au point est trop éloignée, l'observateur perçoit un écrasement de la profondeur. Dans l'un et l'autre cas, il y a une incohérence dans l'image entre les deux dimensions (correspondant à une image plate) et la troisième dimension, à savoir la profondeur, cette incohérence pouvant aller jusqu'à dépasser les capacités de compensation perceptives de l'observateur. Ce phénomène doit être pris en compte pour déterminer les angles limites (2α) à ne pas dépasser pour préserver une impression "naturelle". Au-delà et en deçà, il faut modifier la base stéréoscopique pour restituer la valeur de l'angle ($2\alpha$) dans ces limites en fonction des distances de mises au point simulées.

Ceci conduit à créer des modifications d'échelle des scènes calculées ou reconstruites, et donc à réaliser une adaptation entre le grandissement linéaire de l'image et la perception de la profondeur. La résolution horizontale utilisable pour chaque point de vue définit la taille des segments en profondeur analysables et observables dans l'image et par conséquent leur nombre entre la distance minimale et maximale de mise au point correspondant aux limites de l'angle ($2\alpha$), en ne perdant pas de vue que la profondeur du champ stéréoscopique observable à l'écran dépend du nombre de points de vue total utilisés et du pas du sélecteur optique (réseau lenticulaire) sur l'écran.

S'il était possible de simuler une prise de vue avec une pupille totale continue, les objets étant parfaitement nets et/ou bougeant les uns par rapport aux autres de façon continue lorsque l'observateur déplace la tête parallèlement au plan de l'écran, les objets présentés à l'écran ne pourraient, entre les points de vue limites (a) et (d), se déplacer en apparence sur l'écran que d'une distance horizontale égale au nombre n de points de vue multiplié par le pas du sélecteur optique, c'est-à-dire de $n^2$ pixels.

C'est ce déplacement maximal qui définit la notion de profondeur du champ stéréoscopique.

Si la simulation est effectuée avec une caméra à sténopé, les objets semblent par contre bouger de manière discontinue, mais la valeur de la profondeur du champ stéréoscopique reste la même que dans le cas d'une pupille continue.

Avec une pupille réelle continue, le flou apparaît donc dès que les objets de déplacent de plus de n̲ lentilles avec n̲ points de vue et n̲ pixels par lentille, soit un déplacement de plus de $n^2$ pixels. La discrétisation du capteur "CCD" crée un compromis entre la vraie continuité et la discrétisation liée aux caméras à sténopé.

On définit la profondeur du champ visualisé comme la distance entre le point le plus proche $P_p$ et le point le plus éloigné $P_e$ de la scène à visualiser. La profondeur du champ visualisé n'est augmentable qu'à la condition de simuler des pupilles ponctuelles ou une pupille globale non continue (ce qui est effectivement le cas avec des caméras à sténopé) avec des objets, qui au-delà d'une certaine distance apparente de l'écran de visualisation (1/3 en avant et 2/3 en arrière de la distance de visualisation), semblent bouger par sauts discrets de plus en plus importants lorsqu'ils s'éloignent de l'écran et restent nets.

Lorsque l'on utilise une profondeur du champ stéréoscopique qui oblige les objets sur lesquels la mise au point n'est pas effectuée à se déplacer par sauts discrets, les conditions initiales de visualisation se détériorent lorsque les sauts discrets deviennent trop importants, au point de ne plus permettre l'observation que dans la tranche d'espace devant l'écran où la teinte plate est parfaite. En effet, les objets présentés loin de l'écran semblent constitués de fragments brisés recollés, soit en excès soit en défaut de matière. C'est ce qui se produit en particulier si la prise de vue est réalisée dans des conditions exagérant la profondeur ("hyperstéréoscopie"). Les inconvénients se cumulent alors et, à une perturbation de la perception du relief, s'ajoute l'inconfort d'une limitation importante de l'espace d'observation. Il n'est pas souhaitable d'user d'une trop grande profondeur de champ pour la scène à visualiser, si comme c'est le cas en télévision, on ne dispose que d'une résolution d'affichage restreinte. Il est très pénible d'avoir à observer des objets très éloignés de l'écran parce que notre capacité à dissocier la vergence binoculaire et l'accommodation monoculaire est limité. L'objet sera perçu flou et en diplopie (défaut de fusion binoculaire).

Si on se reporte à la figure 2, on a :

$$p = f \, \frac{\cos(\pi/2 - \alpha)\,(d-D)}{\sin(\pi/2 - \alpha)d + \dfrac{\sin^2(\alpha)\,D}{\cos(\alpha)}}$$

et

$$f = \frac{e}{2\tan(\theta/2)}$$

soit

$$p = f \, \frac{\text{tg}\,\alpha\,(d-D)}{d + D\,\text{tg}^2\,\alpha}$$

avec :

p = la distance de projection par rapport au centre $P_o$ de l'écran de projection

f = la distance séparant le trou du sténopé du plan de l'écran E de projection, dénommée distance focale d'une caméra simulée.

D = la distance à laquelle les axes de visée des caméras convergent au point de mise au point P (D = OP).

d = la distance du point observé au point O.

$\alpha$ = la moitié de l'écart angulaire séparant deux caméras (exprimé en radian)

e = la largeur de l'écran de projection

$\Theta$ = l'angle complet d'ouverture du champ d'observation d'une caméra simulée, c'est-à-dire son angle de champ.

Les données qui permettent de calculer et d'évaluer les qualités des systèmes mis en oeuvre seront les suivantes :

- la distance focale f et largeur d'image e qui déterminent l'angle de champ.
- la résolution horizontale et la largeur dimage e qui déterminent la taille des pixels.
- la distance focale f et l'ouverture qui déterminent le diamètre utile de la pupille et la base stéréoscopique totale.
- la base stéréoscopique totale et le nombre n de points de vue choisi qui déterminent la base utile b entre deux caméras simulées contiguës, et donc entre deux points de vue contigus.
- la base stéréoscopique $b = O_1O_2 = O_2O_3 = O_3O_4$ entre deux points de vue contigus et la distance de mise au point OP (ou la distance du point observé mis en correspondance simultanément sur les points de vues "monoculaires") qui déterminent l'angle 2a formé par les deux axes optiques de deux caméras contiguës correspondant à deux points de vue contigus,
- la résolution horizontale, la distance de mise au point OP et la base stéréoscopique entre deux points de vue contigus qui déterminent la profondeur du champ stéréoscopique à la visualisation.

La perception du relief est déterminée par le rapport qui existe entre la distance b et la variation de profondeur $\Delta D = d - D$. Ce rapport, qui varie en fonction de b et de $\alpha$, doit être proportionné au grandissement linéaire de l'image pour que le relief soit perçu de manière réaliste par un observateur.

EXEMPLE I :

Caméra réelle : distance focale de l'objectif réel à simuler = 200 mm ; ouverture f/2 ; largeur d'image 57,6 mm ; taille d'un pixel = 0,1 mm ; nombre n de points de vue = 4.

Nous pouvons démarrer la mise au point au double de la distance focale soit 400 mm. Ceci conduit à avoir des images de même taille que les objets filmés sur le plan image physique. Le champ stéréoscopique théorique du dispositif avec quatre points de vue s'étend entre 384 mm et 416 mm. Un objet dont l'image a horizontalement une dimension égale à un pixel apparent (en réalité, une lentille de 0,4 mm de largeur) forme son image au plan focal sur une seule lentille et les quatre pixels sont utilisés. Si on dispose un objet aux limites de la profondeur théorique du champ stéréoscopique :

- à la limite inférieure (384 mm), l'objet semble sortir de l'écran de visualisation, l'image occupe quatre lentilles avec un seul pixel par lentille de la manière suivante :

  - Position des pixels dans les colonnes de quatre :

$$(\mathbf{1},2,3,4) \ ; \ (1,\mathbf{2},3,4) \ ; \ (1,2,\mathbf{3},4) \ ; \ (1,2,3,\mathbf{4}) \ ;$$
$$\quad X \qquad\qquad X \qquad\qquad X \qquad\qquad X$$

- à la limite supérieure (416 mm), l'objet semble à l'intérieur de l'écran et l'image occupe quatre lentilles avec un seul pixel par lentille de la manière suivante :

$$(1,2,3,\mathbf{4}) \ ; \ (1,2,\mathbf{3},4) \ ; \ (1,\mathbf{2},3,4) \ ; \ (\mathbf{1},2,3,4) \ ;$$
$$\quad X \qquad\qquad X \qquad\qquad X \qquad\qquad X$$

Au delà de ces limites théoriques, les objets forment une image s'étalant sur plus de quatre lentilles et si l'on ne diaphragme pas chaque point de vue, en prise de vue réelle, les pixels doivent partager la surface image avec d'autres points de l'image, ce qui donne une sensation de flou qui va croissante au fur et à mesure que l'on dépasse les deux limites précitées.

La caméra réelle précitée peut être simulée à l'aide de quatre caméras à sténopé avec b = 3 cm, 2α = 4,29°, et un angle Θ correspondant à l'angle de champ de la caméra réelle. La distance focale f̲ des caméras simulées peut être choisie de manière arbitraire. Le nombre de pixels simulés correspond à la résolution souhaitée, soit 143 pixels horizontalement pour chaque caméra simulée pour obtenir la résolution de la caméra réelle.

Pour les images de synthèse, le flou n'existe que si on le calcule spécialement. Au delà des deux limites précitées, et lorsque l'observateur se déplace par rapport à un écran de visualisation, les objets situés au delà des deux limites précitées (par exemple 384 et 416 mm) parcourent une portion de l'écran par sauts discrets. Tant que l'angle 2α ne dépasse pas 4,5°, la qualité de visualisation reste compatible avec un déplacement de l'observateur par rapport à l'écran de visualisation et avec le confort visuel que l'on attend en vidéo standard. En effet, plus l'angle α augmente, à base stéréoscopique constante, plus la distance de mise au point diminue. Plus cette distance est inférieure à la distance de l'observateur à l'écran de visualisation, plus l'effet stéréoscopique augmente, cette hyperstéréoscopie étant dans une certaine mesure compensée par le cerveau, et par contre plus la profondeur du champ stéréoscopique diminue. Il existe une limite, correspondant à 2α = 4,5°, au delà de laquelle la qualité est dégradée dans une mesure telle que l'observateur ne peut plus se déplacer par rapport à l'écran.

La scène n'est alors observable qu'à la distance dite de la "teinte plate". La faible profondeur du champ stéréoscopique implique que les objets débordent rapidement le volume du champ stéréoscopique au point de condamner l'observateur à rester à la distance de la "teinte plate". Lors d'un déplacement de l'observateur parallèlement à l'écran de visualisation, les mouvements apparents des objets sont exagérés, voire désagréables. Pour les déplacements de l'observateur perpendiculairement à l'écran de visualisation, les parties d'objet débordant le volume du champ stéréoscopique, apparaissent en tronçons mal raccordés en excès ou en défaut de surface, rendant l'observation pénible et créant une rupture de la sensation de relief de l'ensemble de la scène, ce qui fait perdre les avantages de l'autostéréoscopie.

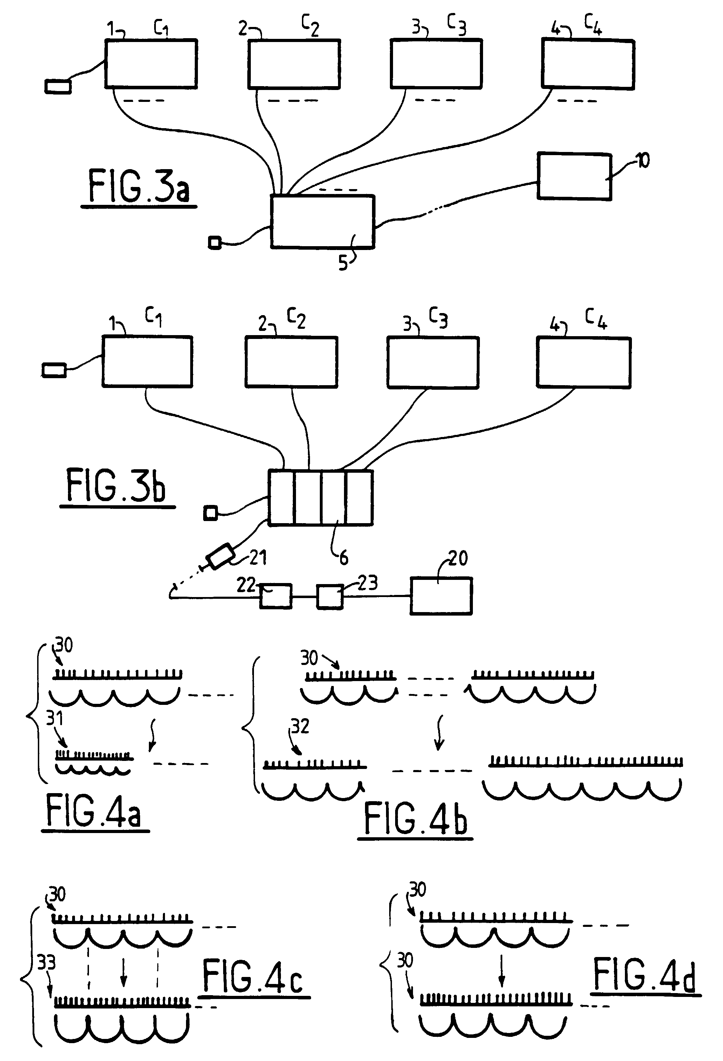

Si on utilise une plus haute résolution et si on simule plus de quatre points de vue, par exemple huit, l'objet pourra parcourir huit lentilles au lieu de quatre en restant parfaitement net. Si les lentilles sont de même taille que dans le premier cas, la profondeur du champ stéréoscopique est doublée. La résolution nécessaire horizontalement est double avec des pixels apparents de même taille que dans le premier cas (voir ci-après la description correspondant à la figure 4d̲).

Lorsque la mise au point évolue, l'angle 2 α diminue en prenant des valeurs qui baissent de moins en moins (de manière asymptotique) :

pour la mise au point à 500 mm..... 3,43°

à 600 mm..... 2,86°

à 800 mm..... 2,14°

à 1000 mm..... 1,71°

à 2000 mm..... 0,85°

à 4000 mm..... 0,42°

à 8000 mm..... 0,21°, etc...

En fait quand la distance double, la valeur de l'angle est divisée par deux. Le rapport de la valeur de la profondeur du champ stéréoscopique à celle de la distance de mise au point est divisée par un peu plus que deux, valeur qui croit à mesure que l'on s'éloigne. La profondeur du champ stéréoscopique devient très rapidement un pourcentage important de la distance de mise au point. Ceci permet de déterminer la seconde valeur limite de l'angle 2α qu'il est inutile de dépasser compte tenu de la résolution disponible et du nombre de points de vue. Dans l'exemple précité, la mise au point à 8000 mm, donne un champ stéréoscopique s'étendant entre 4444 mm..... et 40000 mm pour un angle 2α de 0,21°. A cette distance, l'horizon semble un peu flou, mais acceptable et la sensation de relief au delà de la zone de profondeur du champ stéréoscopique n'a pas d'intérêt avec la résolution vidéo standard.

Les valeurs limites de l'angle 2 α sont donc comprises utilement entre 4,5° et 0,20°.

Sans pouvoir interpréter exactement les rapports qui existent entre les paramètres de la vision humaine dans la réalité et ceux du système de prise de vue autostéréoscopique réel, il est très facile de vérifier l'impression de réalisme et de conformité des images obtenues par ce procédé.

On peut utiliser ces données comme étant sensiblement équivalentes aux données de la vision binoculaire humaine, ou considérer qu'elles n'introduisent pas ou peu de distorsions dans la perception du relief par vidéo interposée. Depuis notre naissance, notre système visuel a servi de base au traitement mental d'images qui nous sert à percevoir le relief : la focale, l'ange de champ, l'angle de champ effectif perçu au travers d'une fenêtre placée à une certaine distance (cas équivalent à un écran de télévision de même taille apparente), l'écart interpupillaire associé à des mécanismes physiologiques de vergence, de focalisation de maintien de l'équilibre du corps et de l'estimation de mouvement sont spécifiques à chaque individu et influent sur ses sensations.

L'ensemble des perceptions proprioceptives (perceptions internes des efforts musculaires et des tensions ligamentaires nécessaires à l'équilibre, la mobilité, la fusion binoculaire, etc..) constitue une source d'informations qu'il est impossible de déconnecter ; cela a des conséquences très peu prises en compte dans les systèmes classiques de prise de vue et de présentation d'images en relief.

Les dimensions d'un objet dans les deux directions parallèles au plan de l'écran (x et y) sont divisées par deux lorsque l'objet est deux fois plus loin. Il est possible de les mesurer par projection sur un plan image. L'impression de relief (estimation de la troisième dimension (z)) ne peut se faire que par comparaison entre deux images plates formant un couple stéréoscopique. Leur différence (disparité) (ou quantité de mouvement apparent parallèlement au plan image des objets de la scène les uns par rapport aux autres) permet de créer une impression qui est subordonnée au traitement effectué par le cerveau. Il est très facile d'introduire des paramètres qui trompent l'observateur en déformant les valeurs estimées de profondeur. En choisissant un angle 2α constant et en changeant les distances de prise de vue au prix d'une modification proportionnelle de la base stéréoscopique et de la focale, (ce qui correspond à un système à ouverture constante : dans notre exemple f/2, et à champ constant) on crée un grandissement ou une réduction homogène des trois dimensions et par exemple, un cube est perçu comme tel mais plus grand ou plus petit. On perçoit un objet qui change de taille en rapport inverse de celle qu'il aurait si nos yeux étaient à la place de la pupille de l'objectif simulé.

En modifiant la base stéréoscopique b̲ sans changer les autres paramètres, on crée alors de l'hyper ou de l'hypo-relief (l'objet semble écrasé ou étiré en profondeur) parce que l'on modifie l'angle 2α sans modification de la distance de mise au point. Les grandeurs (x et y) d'un objet sont inchangées (estimation de la taille des objets et de la profondeur liées aux lignes de fuite en vision monoculaire), alors que l'estimation de la profondeur par effet stéréoscopique est exagérée ou diminuée étant donné que la disparité est modifiée.

En conclusion, pour la vision humaine, pour la prise de vue, ou le calcul d'images, il n'existe qu'un rapport unique idéalement entre la variation de la disparité et la variation des dimensions apparentes liées à la perspective pour un angle de champ donné. La modification de l'angle de champ (effet de "Zoom") ou (effet de "loupe" " sur une partie de l'image) ne sera jamais équivalent à un déplacement de la caméra vers l'objet (effet de "travelling") parce que, si les grandeurs (x et y) dans un plan parallèle au plan image grandissent bien de la même façon dans les deux effets, le rapport de distance entre l'observateur et les plans n'est modifié que par le "travelling" et donc la perception de la profondeur n'est modifiée que dans ce dernier cas. Nous ne sommes pas dotés d'une vue "multifocales" ni d'une vue "zoom", et ces effets vus en relief introduiront toujours des perturbations de la sensation de profondeur. Seul le "travelling" en relief peut être exactement conforme à ce qui se passe dans la réalité à condition d'utiliser un objectif dont l'angle de champ est égal à celui formé par l'écran à la distance d'observation si le grandissement apparent d'un objet filmé à la distance égale à celle du spectateur à son écran est égale à un.

Si le grandissement linéaire est différent de un, il faut introduire un coefficient correcteur pour évaluer l'angle de champ de la caméra en considérant la taille de l'écran qui permettrait effectivement d'avoir un grandissement linéaire de un à la place de l'écran réel. Le dernier point, est celui de la distance de mise au point qui peut être différente de la distance d'observation de l'écran. Une collimation peut être artificiellement introduite ou à défaut des petites corrections décrites plus avant. Nous sommes culturellement très habitués à regarder des scènes à la télévision filmées de loin. Le champ apparent y est plus important. En conséquence, en ce qui concerne le relief, l'effet de la disparité sera plus faible que dans la réalité observée directement, mais les indices monoculaires permettent à l'observateur de transposer ce qu'il voit avec un effort de vergence trop important et de compenser un peu la perte de sensation de profondeur grâce à l'augmentation significative de la profondeur de champ de la scène perçue.

L'ensemble de ces considérations valent pour un réglage d'écran de visualisation observé à la distance théorique de la "teinte plate". Si on change la distance d'observation, en se rapprochant de l'écran de visualisation, on doit, pour rester exactement dans les mêmes conditions, diminuer la distance D de la caméra à l'objet et on doit augmenter l'angle de champ (par exemple horizontal) pour le faire correspondre à l'angle de champ modifié formé par l'écran de visualisation à la nouvelle distance de visualisation. La base stéréoscopique ne change pas.

Si on remplace un écran de dimensions données à une distance donnée par un écran x̲ fois plus grand, vu x̲ fois plus loin, le relief perçu est exagéré, mais on considère que tant que x̲ reste inférieur à 3 ou 4, la sensation de relief reste acceptable lorsque 2α est compris dans les limites précitées ((0,2° - 4,5°).

EXEMPLE II

Caméra réelle : distance focale = 50 mm, ouverture f/2, largeur d'image = 576 x 12,5 μ ; largeur d'un pixel = 12,5 μ ; 4 points de vue. La focale et la base stéréoscopique sont quatre fois plus courtes que dans l'exemple I. Le grandissement apparent est donc de quatre. L'angle de champ est deux fois plus petit.

Il faut filmer quatre fois plus près pour le même angle 2α. En simulation, la base stéréoscopique b est quatre fois plus petite que précédemment. La disparité est la même, mais la taille ressentie des objets de second plan est un peu grande à cause de la modification de l'angle de champ (qui correspond à un effet de "zoom") ; cela n'est pas gênant parce que nous sommes capables de corriger mentalement tant que cet effet n'est pas trop important (jusqu'à 3 fois environ) Cette évaluation tient compte du fait que nous pouvons sans gêne nous rapprocher de notre écran pour percevoir les couples (1 et 4) ou nous éloigner pour percevoir les couples (1 et 2) ou (2 et 3) ou (3 et 4), cela se traduisant par une modification apparente de l'angle sous-tendu par l'écran dans un rapport de trois en moyenne. Le fait de regarder une scène plus petite est déjà inhabituelle en relief, l'évaluation exacte de la profondeur utilise un peu plus notre compensation mentale.

Les figures 3a et 3b montrent le traitement des signaux permettant de passer de chacune des images élémentaires 1, 2, 3 et 4 ($n = 4$) données par les caméras $C_1$, $C_2$, $C_3$ et $C_4$ à une image autostéréoscopique pouvant être affichée sur un écran 10. Chacune des images 1, 2, 3 et 4 est composée de X lignes et Y colonnes dont chaque pixel a une résolution anisotrope égale à la résolution vidéo nominale dans le sens vertical et à 1/n fois (soit 1/4) la résolution vidéo nominale dans le sens horizontal.

Selon la figure 3a, l'image 5 présentant X lignes et nY colonnes est composée successivement de la première colonne de l'image 1, de la première colonne de l'image 2, de la première colonne de l'image 3, de la première colonne de l'image 4, de la deuxième colonne de l'image 1 et ainsi de suite. L'image 5 peut être visualisée directement sur un écran vidéo stéréoscopique 30 équipé d'un réseau lenticulaire.

Selon la figure 3b, les images 1, 2, 3, et 4 sont placées côte à côte pour former une image 6 à X lignes et nY colonnes comportant quatre images plates de format anamorphosé. Les Y premières colonnes de l'image 6 sont occupées par les pixels des Y colonnes de l'image 1, les Y colonnes suivantes par les Y colonnes de l'image 2, et ainsi de suite. Ceci correspond donc au mode "n images" selon le Brevet FR-2 705 006, qui convient particulièrement à un enregistrement et/ou une transmission. Par exemple, à la figure 3b, un émetteur 21 émet les images 6 qui sont reçues par un récepteur 22 et dont les colonnes sont permutées par un décodeur 23 pour obtenir une image telle que l'image 5 affichable sur l'écran vidéo stéréoscopique 20 équipé d'un réseau lenticulaire.

Les figures 4a à 4d illustrent quatre variantes particulièrement avantageuses de l'invention.

Selon la figure 4a, si on part d'un système à quatre points de vue équipé sur l'écran 10 ou 20 d'un réseau lenticulaire 30 de pas donné, on peut améliorer la finesse de l'image en augmentant le nombre de pixels dans le sens horizontal, sur la caméra simulée, ainsi que sur l'écran 10 ou 20. On utilise alors un réseau lenticulaire 31 plus fin sur l'écran 10 ou 20. Ceci correspond à une caméra réelle ayant un réseau lenticulaire de pas plus faible, et pour laquelle il faudrait diaphragmer légèrement les sous-pupilles pour conserver la profondeur du champ à la prise de vue. En simulation, rien ne change et la profondeur du champ stéréoscopique est divisée par deux, mais comme le pas des lentilles est deux fois plus fin, la sensation globale (perception de la continuité apparente) est la même.

Selon la figure 4b, on peut augmenter la surface de l'image par ajout de pixels et de lentilles cylindriques. L'écran 10 ou 20 est agrandi en proportion et le réseau lenticulaire 30 est remplacé par un réseau plus large, mais de même pas et de même focale. Ceci correspondant par exemple au passage au format 16/9 voire au format cinémascope. Les paramètres du système de prise de vue ne changent pas et la profondeur du champ stéréoscopique reste la même.

Selon la figure 4c, on peut augmenter l'angle solide de perception en augmentant le nombre n de points de vue sans changer l'angle $2\alpha$ entre deux caméras simulées contiguës. On ne change ni le nombre ni la taille des lentilles cylindriques, mais on diminue la taille des points image (pixels) et la focale des lentilles cylindriques du réseau lenticulaire 33 par rapport à celle du réseau 30. Sur une caméra réelle, ceci correspondrait à une pupille plus ouverte à focale égale et à une diminution de la focale du réseau lenticulaire en correspondance avec l'augmentation de l'angle d'ouverture ainsi qu'à une diminution de la taille des pixels. Comme dans le cas précédent, la profondeur du champ stéréoscopique reste inchangée.

Selon la figure 4d, on augmente la résolution angulaire dans l'angle solide d'observation en diminuant l'angle 2a entre deux points de vue adjacents en proportion du nombre de points de vue additionnels qui sont ajoutés. On conserve le réseau 30 et on ne change que le nombre des pixels à la prise de vue et à la restitution. Le résultat est une augmentation de la profondeur du champ stéréoscopique en proportion du nombre de points de vue additionnels puisque, pour atteindre les limites de la profondeur du champ stéréoscopique, l'image d'un objet se déplaçant depuis le point de mise au point le long de la bissectrice des axes optiques des deux caméras simulées extrêmes $C_1$ et $C_4$ doit parcourir n lentilles (soit $n^2$ pixels), et que la taille des lentilles ne change pas, ainsi qu'une augmentation de la résolution dans le sens de la profondeur. Ce cas est surtout intéressant lorsque le nombre n de point de vue dépasse 4. L'angle $2\alpha$ est alors compris entre $(18/n)°$ et $(0,8/n)°$. Par exemple, pour 6 points de vue, $2\alpha$ varie entre 3° et 0,13°.

Il existe deux façons différentes de créer des axes optiques convergents pour les n caméras (avec $n \geq 3$).

-    La première consiste à les positionner comme montré aux figures 1 et 2a.

En position nominale, les plans image simulés ou écrans $E_1$ à $E_4$ sont tangents à un cercle dont le rayon est égal à la distance de mise au point simulée ($O_1P = O_2P = O_3P = O_4P = D'$). L'axe optique ($A_1...A_4$) de chaque caméra simulée, défini comme l'axe perpendiculaire au plan de l'écran ($E_1...E_4$) et passant par le point $P_o$, passe également par les trous ($O_1....O_4$) du sténopé correspondant. Ce système présente un relatif inconvénient lorsque la focale simulée est courte (grand champ) et que la distance de mise au point est rapprochée. En effet, la rotation des plans images donne des objets éloignés de l'horizon et de l'axe vertical passant par le centre, des images de tailles différentes qui limitent la capacité de fusion binoculaire par le fait que les pixels homologues dans deux points de vue sont à des hauteurs différentes. En effet, la rotation des caméras donne d'un rectangle (fenêtre équivalent à l'écran $E_1$ à $E_4$) des images déformées en trapèze dans le sens vertical.

En effet, les quatre plans de mise au point passant par le point P ne sont pas coplanaires, étant donné que les plans de mise au point sont situés au plan image.

- La seconde solution, qui est la solution préférée représentée à la figure 6, consiste à disposer les n caméras avec leurs centres optiques $O_1$, $O_2$, $O_3$ et $O_4$ alignés selon un axe x'x et avec leurs surfaces sensibles simulées ou écrans $E_1$ à $E_4$ parallèles entre elles, c'est-à-dire avec leurs axes optiques $A_1$ à $A_4$ parallèles entre eux et à l'axe x'x et à glisser latéralement par décentrement les quatre optiques simulées dans le sens des flèches de manière à aligner le centre $P_o$ de chacune des images simulées avec le centre optique $(O_1..O_4)$ de chacune des optiques correspondantes et avec le point de mise au point P. Ce centre $P_o$ est, pour une image rectangulaire le point de croisement des diagonales de l'image cadrée en vue de sa visualisation. On considère en première approximation que le point P est à la même distance D' des centres optiques des caméras simulées $O_1 P \approx O_2 P = O_3 P = O_4 P$. En d'autres termes, les points d'intersection $P_o$ des droites $O_1 P$, $O_2 P$, $O_3 P$ et $O_4 P$) avec les plans image simulés $E_1$, $E_2$, $E_3$, $E_4$ déterminent le centre nominal des images à visualiser sur un écran de projection ou de rétro-projection. Dans ce cas un rectangle équivalent à la fenêtre écran $(E_1...E_4)$ de largeur $\underline{e}$ et correspondant au point de mise au point P est perçu comme un rectangle par chaque caméra simulée. La variation de la distance inter-caméras $\underline{b}$ se fait par la modification du décentrement $(d_1...d_4)$ des caméras simulées. A la figure 6, les angles et le décentrement ont été exagérés dans le but de faciliter la compréhension.

Les caméras simulées sont de préférence des caméras à sténopé.

Les autres plans images restent parallèles entre eux et à l'infini, il n'y a aucune distorsion entre les quatre images d'un même objet. L'axe passant par le point P et le centre optique $(O_1, O_2, O_3, O_4)$ des caméras simulées n'est alors en général plus l'axe optique des caméras simulées. Les deux solutions conduisent aux mêmes valeurs limites pour les angles $2\alpha$. La distance inter-caméras $\underline{b}$ reste égale à la distance entre les centres optiques, par exemple $O_1$ et $O_2$ de deux caméras simulées adjacentes.

En pratique, on peut éviter de modifier le logiciel utilisé en définissant des fenêtres écran E', à savoir $(E'_1... E'_4)$ ayant chacune un centre $P'_o$ et une largeur $\underline{e'}$ plus grande que celle $\underline{e}$ de l'image simulée et de même hauteur que celle-ci (voir figure 2b). Le point d'intersection entre la droite $(PO_1...PO_4)$ et la fenêtre écran correspondante $(E'_1.... E'_4)$ est le point $P_o$. Une sous-fenêtre $(E_1....E_4)$ de largeur e ayant le format d'image souhaité et dont le centre est $P_o$, est extraite de la fenêtre écran $(E'_1....E'_4)$ définie ci-dessus. Le programme est utilisé pour calculer les pixels de cette sous-fenêtre $(E_1....E_4)$. Il est inutile de calculer tous les pixels de chacune des fenêtres $(E'_1....E'_4)$.

## Revendications

1. Procédé d'acquisition d'images vidéo autostéréoscopiques simulées d'une scène à visualiser caractérisé en ce qu'il met en oeuvre, à partir de données mémorisées comportant des informations à trois dimensions d'un objet ou de la scène à visualiser sur un écran de visualisation, n avec n $\geq$ 3, caméras simulées, générant chacune une image de ladite scène et ayant chacune un centre optique $(O_1...O_4)$ et une surface sensible simulée $(E_1...E_4)$ ayant un centre $(P_o)$, les caméras simulées étant équidistantes et séparées d'une même distance inter-caméras $\underline{b}$ qui reste constante pendant une prise de vue avec un angle de champ constant et chacune des caméras simulées présentant un axe passant par le centre $P_o$ de sa surface sensible simulée $(E_1...E_4)$, par son centre optique $(O_1... O_4)$ ainsi que par un point P dit de mise au point simulée, situé sensiblement à une même distance D' desdites caméras simulées, en ce que la scène à visualiser présente un point le plus proche $P_p$ et un point le plus éloigné $P_e$, et en ce que l'on choisit d'une part la distance $D_{min}$ entre l'ensemble des caméras simulées et le point le plus proche $P_p$, et d'autre part la distance inter-caméras $\underline{b}$ de telle sorte que, pour ladite prise de vue et pour une mise au point variant entre le point le plus proche $P_p$ et le point le plus éloigné $P_e$, l'angle $2\alpha$ entre lesdits axes de deux caméras simulées adjacentes varie entre une valeur au plus égale à 4,5° pour le point $P_p$ et une valeur au moins égale à 0,2° pour le point $P_e$.

2. Procédé selon la revendication 1, caractérisé en ce que, pour une scène comportant un point $P_e$ situé à l'infini, on choisit la distance inter-caméras $\underline{b}$ pour que, l'angle $2\alpha$ ayant une valeur égale à 0,2°, le point P de mise au point simulé soit situé à une distance $D_{max}$ telle que l'image d'un objet se déplaçant de la distance $D_{max}$ à l'infini le long de la bissectrice desdits axes de deux caméras simulées extrêmes $(C_1, C_4)$ se déplace sur l'écran de visualisation d'une distance au plus égale à $n^2$ fois le pas des pixels.

3. Procédé d'acquisition d'images stéréoscopiques simulées d'un objet ou d'une scène à visualiser, caractérisé en ce qu'il met en oeuvre à partir de données mémorisées comportant des informations à trois dimensions de l'objet ou de la scène à visualiser sur un écran de visualisation, n caméras simulées, avec n > 4, générant chacune une image de ladite scène et ayant chacune un centre optique $(O_1...O_4)$ et une surface sensible simulée $(E_1....E_4)$ ayant un centre $(P_o)$, les caméras simulées étant équidistantes et séparées d'une même distance inter-caméras $\underline{b}$ qui reste constante pendant une prise de vue, et chacune des caméras simulées présentant un axe passant par le centre $(P_o)$ de sa surface sensible simulée $(E_1...E_4)$, par son centre optique $(O_1...O_4)$ ainsi que par un point P dit de mise au point simulée, situé sensiblement à une même distance D' desdites caméras simulées, en ce que la scène à visualiser présente un point le plus proche $P_p$ et un point le plus éloigné $P_e$, et en ce que l'on choisit d'une part la distance $D_{min}$ entre les caméras simulées et le point le plus proche $P_p$, et d'autre part la distance inter-caméras $\underline{b}$ de telle sorte que, pour ladite prise de vue, et pour une mise au point variant entre le point le plus proche $P_p$ et le point le plus éloigné $P_e$, l'angle $2\alpha$ entre lesdits axes de deux caméras simulées adjacentes varie entre une valeur au plus égale à $(18/n)°$ pour le point $P_p$ et une valeur au moins égale à $(0,8/n)°$ pour le point $P_e$.

4. Procédé selon la revendication 3 caractérisé en ce que, pour une scène comportant un point $P_e$ situé à l'infini, on choisit la distance inter-caméras $\underline{b}$ pour que, l'angle $2\alpha$ ayant une valeur égale à $(0,8/n)°$, le point P de mise au point simulée soit situé à une distance $D_{max}$ telle que l'image d'un objet se déplaçant de la distance $D_{max}$ à l'infini le long de la bissectrice desdits axes de deux caméras simulées extrêmes $(C_1, C_4)$, se déplace sur l'écran de visualisation d'une distance au plus égale à $n^2$ fois le pas des pixels.

5. Procédé selon une des revendications précédentes, caractérisé en ce que lesdits axes sont les axes optiques des caméras simulées.

6. Procédé selon une des revendications 1 à 4, caractérisé en ce que les caméras simulées ont leurs surfaces sensibles simulées $(E_1...E_4)$ parallèles entre elles et disposées sensiblement sur un même plan, et en ce que la base stéréoscopique $\underline{b}$ est obtenue par décentrement $(d_1....d_4)$.

7. Procédé selon une des revendications précédentes, caractérisé en ce que les caméras simulées $(C_1...C_4)$ sont du type à sténopé.

8. Procédé selon une des revendications précédentes, caractérisé en ce qu'à chaque point image de la caméra simulée est affectée une résolution verticale égale à la résolution verticale nominale de l'image vidéo et une résolution horizontale égale à 1/n fois la résolution horizontale nominale de l'image vidéo.

9. Procédé selon une des revendications précédentes, caractérisé en ce qu'il comporte une étape d'imbrication des P colonnes des n images élémentaires pour obtenir une image vidéo autostéréoscopique imbriquée comprenant n x p colonnes.

10. Procédé selon une des revendications précédentes, caractérisé en ce qu'il comporte une étape de changement apparent de dimension d'un objet ou d'une scène sans perturber sa géométrie à partir d'une mise au point à ladite distance D', par déplacement des caméras simulées sans changement du point (P) de mise au point, l'angle $2\alpha$ étant maintenu constant, et la valeur de la distance inter-caméras $\underline{b}$ étant modifiée en proportion de la modification de la distance de mise au point

11. Procédé selon une des revendications précédentes caractérisé en ce que l'image comporte des couples stéréoscopiques ayant une base stéréoscopique donnée B, les points de vue dudit couple stéréoscopique étant séparés par m points de vue intermédiaires, avec m entier > 1.

12. Procédé selon la revendication 11 caractérisé en ce qu'il comporte une étape de visualisation dans des conditions où, à la distance théorique dite de la "teinte plate", un observateur voit un dit couple stéréoscopique dont les points de vue sont séparés par m points de vue élémentaires.

13. Système vidéo autostéréoscopique caractérisé en ce qu'il comporte :

- un dispositif d'acquisition d'images vidéo autostéréoscopiques simulées d'une scène à visualiser comportant une base de données comportant des données mémorisées comportant des informations à trois dimensions d'un objet ou de la scène à visualiser sur un écran de visualisation, un dispositif de génération de n caméras simulées, avec n ≥ 3, générant chacune une image de ladite scène et ayant chacune un centre optique ainsi qu'une surface sensible simulée $(E_1...E_4)$ ayant un centre $(P_o)$, les caméras simulées étant équidistantes et séparées d'une même distance inter-caméras $\underline{b}$ qui reste constante pendant une prise de vue avec un angle de champ constant et chacune des caméras simulées présentant un axe passant par le centre $P_o$ de sa surface sensible simulée ($E_1...E_4$), par son centre optique ($0_1...0_4$) ainsi que par un point P dit de mise au point simulée, situé sensiblement à une même distance D' desdites caméras simulées, la scène à visualiser présentant un point le plus proche $P_p$ et un point le plus éloigné $P_e$, ledit dispositif de génération de n caméras simulées présentant un paramétrage tel que d'une part la distance $D_{min}$ entre l'ensemble des caméras simulées et le point le plus proche $P_p$ et d'autre part la distance inter-caméras $\underline{b}$ répondent à la condition selon laquelle pour ladite prise de vue et pour une mise au point variant entre le point le plus proche $P_p$ et le point le plus éloigné $P_e$, l'angle $2\alpha$ entre lesdits axes de deux caméras simulées adjacentes varie entre une valeur au plus égale à 4,5° pour le point $P_p$ et une valeur au moins égale à 0,2° pour le point $P_e$ ;

- un dispositif de visualisation dans lequel un observateur voit, à la distance théorique de la "teinte plate", un couple stéréoscopique comportant deux points de vue séparés par m points de vue intermédiaires, avec m supérieur ou égal à 1.

**14.** Système selon la revendication 13, caractérisé en ce que le dispositif de génération de n caméras simulées présente un paramétrage tel que, pour une scène comportant un point $P_e$ situé à l'infini, la distance inter-caméras $\underline{b}$ soit telle que, l'angle $2\alpha$ ayant une valeur égale à 0,2°, le point P de mise au point simulée soit situé à une distance $D_{max}$ telle que l'image d'un objet se déplaçant à la distance $D_{max}$ à l'infini le long de la bissectrice desdits axes de deux caméras simulées extrêmes ($C_1$, $C_4$) se déplace sur l'écran de visualisation d'une distance au plus égale à $n^2$ fois le pas des pixels.

**15.** Système vidéo autostéréoscopique caractérisé en ce qu'il comporte :

- un dispositif d'acquisition d'images stéréoscopique simulées d'un objet ou d'une scène à visualiser, comportant une base de données comportant des données mémorisées comportant des informations à trois dimensions de l'objet ou de la scène à visualiser sur un écran de visualisation, un dispositif de génération de n caméras simulées, avec n > 4, générant chacune une image de ladite scène, chaque caméra simulée ayant un centre optique ($O_1...O_4$) et une surface sensible simulée ($E_1...E_4$) ayant un centre ($P_o$), les caméras simulées étant équidistantes et séparées d'une même distance inter-caméras $\underline{b}$ qui reste constante pendant une prise de vue, et chacune des caméras simulées présentant un axe passant par le centre ($P_o$) de sa surface sensible simulée ($E_1...E_4$), par son centre optique ($O_1...O_4$) ainsi que par un point P dit de mise au point simulée, situé sensiblement à une même distance D' desdites caméras simulées, la scène à visualiser présentant un point le plus proche $P_p$ et un point le plus éloigné $P_e$, et ledit dispositif de génération présentant un paramétrage tel que d'une part la distance $D_{min}$ entre les caméras simulées et le point le plus proche $P_p$, et d'autre part la distance inter-caméras $\underline{b}$ répondent à la condition selon laquelle, pour ladite prise de vue, et pour une mise au point variant entre le point le plus proche $P_p$ et le point le plus éloigné $P_e$, l'angle $2\alpha$ entre lesdits axes de deux caméras simulées adjacentes varie entre une valeur au plus égale à $(18/n)$° pour le point $P_p$ et une valeur au moins égale à $(0,8/n)$° pour le point $P_e$.
- un dispositif de visualisation dans lequel un observateur voit, à la distance théorique de la "teinte plate", un couple stéréoscopique comportant deux points de vue séparés par m points de vue intermédiaires, avec m supérieur ou égal à 1.

**16.** Système selon la revendication 15 caractérisé en ce que, le dispositif de génération de n caméras simulées présente un paramétrage tel que, pour une scène comportant un point $P_e$ situé à l'infini, la distance inter-caméras $\underline{b}$ soit telle que, l'angle $2\alpha$ ayant une valeur égale à $(0,8/n)$°, le point P de mise au point simulée soit situé à une distance $D_{max}$ telle que l'image d'un objet se déplaçant de la distance $D_{max}$ à l'infini le long de la bissectrice des axes optiques de deux caméras simulées extrêmes ($C_1$, $C_4$), se déplace sur l'écran de visualisation d'une distance au plus égale à $n^2$ fois le pas des pixels.

**17.** Système selon une des revendications 13 à 16 caractérisé en ce que lesdits axes sont les axes optiques des caméras simulées.

**18.** Système selon une des revendications 13 à 16 caractérisé en ce que les caméras simulées ont leurs surfaces sensibles simulées ($E_1...E_4$) parallèles entre elles et sont disposées sensiblement sur un même plan, et en ce qu'il comporte un dispositif de décentrement des caméras simulées.

**Patentansprüche**

1. Verfahren zur Gewinnung von simulierten autostereoskopischen Videobildern einer sichtbar zu machenden Szene, dadurch **gekennzeichnet**, daß es, ausgehend von gespeicherten Daten, die dreidimensionale Informationen von einem Objekt oder der Szene, das bzw. die auf einem Sichtschirm sichtbar gemacht werden soll, enthalten, folgendes verwendet: n simulierte Kameras, mit $n \geq 3$, von denen jede ein Bild der genannten Szene erzeugt und jede ein optisches Zentrum ($O_1...O_4$) und eine simulierte empfindliche Oberfläche ($E_1...E_4$) hat, die ein Zentrum ($P_o$) hat, wobei die simulierten Kameras äquidistant und von einem gleichen Zwischenkameraabstand b getrennt sind, der während einer Aufnahme mit einem konstanten Feldwinkel konstant bleibt, und wobei jede der simulierten Kameras eine Achse aufweist, die durch das Zentrum ($P_o$) ihrer simulierten empfindlichen Oberfläche ($E_1...E_4$), durch ihr optisches Zentrum ($O_1...O_4$) sowie durch einen Punkt P, der als Punkt der simulierten Einstellung bezeichnet wird, welcher sich im wesentlichen in einem gleichen Abstand D' von den simulierten Kameras befindet, geht, daß die sichtbar zu machende Szene einen nahesten Punkt $P_p$ und einen fernsten Punkt $P_e$ aufweist, und daß man einerseits den Abstand $D_{min}$ zwischen der Gesamtheit der simulierten Kameras und dem nahesten Punkt $P_p$ sowie andererseits den Zwischenkameraabstand b derart wählt, daß für die genannte Aufnahme und für eine Einstellung, die zwischen dem nahesten Punkt $P_p$ und dem entferntesten Punkt $P_e$ variiert, der Winkel $2\alpha$ zwischen den genannten Achsen von zwei benachbarten simulierten Kameras zwischen einem Wert, der höchstens gleich 4,5° für den Punkt $P_p$ ist, und einem Wert, der wenigstens gleich 0,2° für den Punkt $P_e$ ist, variiert.

2. Verfahren gemäß Anspruch 1, dadurch **gekennzeichnet,** daß man für eine Szene, die einen Punkt $P_e$ enthält, der sich im Unendlichen befindet, den Zwischenkameraabstand b so wählt, damit sich, wenn der Winkel $2\alpha$ einen Wert hat, der gleich 0,2° ist, der Punkt P der simulierten Einstellung in einem Abstand $D_{max}$ befindet, derart, daß sich das Bild eines Objekts, das sich von dem Abstand $D_{max}$ längs der Winkelhalbierenden der genannten Achsen von zwei simulierten extremen Kameras ($C_1$, $C_4$) zum Unendlichen verlagert, auf dem Sichtschirm um eine Entfernung verlagert, die höchstens gleich $n^2$ mal der Teilung der Pixel bzw. Bildpunkte ist.

3. Verfahren zur Gewinnung von simulierten stereoskopischen Bildern eines Objekts oder einer Szene, das bzw. die sichtbar gemacht werden soll, dadurch **gekennzeichnet,** daß es, ausgehend von gespeicherten Daten, die dreidimensionale Informationen von dem Objekt oder der Szene, das bzw. die auf einem Sichtschirm sichtbar gemacht werden soll, enthalten, folgendes verwendet: n simulierte Kameras, mit $n > 4$, von denen jede ein Bild der genannten Szene erzeugt und von denen jede ein optisches Zentrum ($O_1...O_4$) und eine simulierte empfindliche Oberfläche ($E_1...E_4$) hat, die ein Zentrum ($P_o$) hat, wobei die simulierten Kameras äquidistant und durch einen gleichen Zwischenkameraabstand b getrennt sind, der während einer Aufnahme konstant bleibt, und wobei jede der simulierten Kameras eine Achse aufweist, die durch das Zentrum ($P_o$) ihrer simulierten empfindlichen Oberfläche ($E_1...E_4$), durch ihr optisches Zentrum ($O_1...O_4$) sowie durch einen Punkt P, der als Punkt der simulierten Einstellung bezeichnet wird, welcher sich im wesentlichen in einem gleichen Abstand D' von den genannten simulierten Kameras befindet, hindurchgeht, daß die sichtbar zu machende Szene einen nahesten Punkt $P_p$ und einen fernsten Punkt $P_e$ aufweist, und daß man einerseits den Abstand $D_{min}$ zwischen den simulierten Kameras und dem nahesten Punkt $P_p$ sowie andererseits den Zwischenkameraabstand b derart wählt, daß für die genannte Aufnahme und für einen Einstellpunkt, der sich zwischen dem nahesten Punkt $P_p$ und dem fernsten Punkt $P_e$ verändert, den Winkel $2\alpha$ zwischen den genannten Achsen von zwei benachbarten simulierten Kameras zwischen einem Wert, der höchstens (18/n)° für den Punkt $P_p$ und einem Wert, der wenigstens gleich (0,8/n)° für den Punkt $P_e$ ist, variiert.

4. Verfahren gemäß Anspruch 3, dadurch **gekennzeichnet,** daß man für eine Szene, die einen Punkt Pe enthält, der sich im Unendlichen befindet, den Zwischenkameraabstand b so wählt, damit, wenn der Winkel $2\alpha$ einen Wert hat, der gleich (0,8/n)° ist, sich der Punkt P der simulierten Einstellung in einem Abstand Dmax befindet, derart, daß sich das Bild eines Objekts, welches sich von dem Abstand Dmax ins Unendliche längs der Winkelhalbierenden der genannten Achsen von zwei extremen simulierten Kameras ($C_1$, $C_4$) verlagert, auf dem Sichtschirm um eine Entfernung von höchstens gleich $n^2$ mal der Teilung der Pixel bzw. Bildpunkte verlagert.

5. Verfahren gemäß einem der vorhergehenden Ansprüche, dadurch **gekennzeichnet**, daß die genannten Achsen die optischen Achsen der simulierten Kameras sind.

6. Verfahren gemäß einem der Ansprüche 1 bis 4, dadurch **gekennzeichnet,** daß die simulierten Kameras ihre simulierten empfindlichen Oberflächen ($E_1...E_4$) parallel untereinander und im wesentlichen in der gleichen Ebene angeordnet haben, und daß die stereoskopische Basis b durch Verstellbarkeit bzw. Verstellen bzw. Dezentrieren ($d_1...d_4$) erhalten wird.

7. Verfahren gemäß einem der vorhergehenden Ansprüche, dadurch **gekennzeichnet,** daß die simulierten Kameras ($C_1...C_4$) vom Lochblendentyp sind.

8. Verfahren gemäß einem der vorhergehenden Ansprüche, dadurch **gekennzeichnet,** daß in jedem Bildpunkt der simulierten Kamera eine vertikale Auflösung, die gleich der nominellen vertikalen Auflösung des Videobilds ist, und eine horizontale Auflösung, die gleich 1/n mal der nominellen horizontalen Auflösung des Videobilds ist, bestimmt bzw. vorgegeben wird.

9. Verfahren gemäß einem der vorhergehenden Ansprüche, dadurch **gekennzeichnet,** daß es einen Schritt der Überlappung bzw. Verzahnung der P Spalten der n elementaren Bilder zum Erhalten eines überlappten bzw. verzahnten autostereoskopischen Videobilds, das n x p Spalten enthält, aufweist.

10. Verfahren gemäß einem der vorhergehenden Ansprüche, dadurch **gekennzeichnet,** daß es einen Schritt der scheinbaren Änderung der Dimension eines Objekts oder einer Szene, ohne dessen bzw. deren Geometrie zu stören, enthält, und zwar ausgehend von einer Einstellung auf den genannten Abstand D' durch Verlagerung der simulierten Kameras ohne Änderung des Punkts (P) der Einstellung, wobei der Winkel $2\alpha$ konstant gehalten wird und der Wert des Zwischenkameraabstands b in Proportion zu der Modifikation des Abstands der Einstellung modifiziert wird.

11. Verfahren gemäß einem der vorhergehenden Ansprüche, dadurch **gekennzeichnet,** daß das Bild stereoskopische Paare enthält, die eine gegebene stereoskopische Basis B haben, wobei die Sichtpunkt des genannten stereoskopischen Paars durch m zwischenliegende Sichtpunkte getrennt sind, wobei m ganz und > 1 ist.

12. Verfahren gemäß Anspruch 11, dadurch **gekennzeichnet,** daß es einen Schritt des Sichtbarmachens unter den Bedingungen enthält, in denen ein Beobachter mit dem theoretischen Abstand, der als derjenige der "Unifarbe" bezeichnet wird, ein genanntes stereoskopisches Paar sieht, dessen Sichtpunkte durch m Elementarsichtpunkte getrennt sind.

13. Autostereoskopisches Videosystem, dadurch **gekennzeichnet,** daß es folgendes enthält:

  - eine Einrichtung für die Gewinnung von simulierten autostereoskopischen Viderobilden einer sichtbar zu machenden Szene, die eine Basis von Daten enthält, welche gespeicherte Daten enthalten, die dreidimensionale Informationen von einem Objekt oder der Szene, das bzw. die auf einem Sichtschirm sichtbar gemacht werden soll, enthalten, eine Einrichtung zum Erzeugen von n simulierten Kameras, mit $n \geq 3$, von denen jede ein Bild der genannten Szene erzeugt und von denen jede ein optisches Zentrum sowie eine simulierte empfindliche Oberfläche ($E_1...E_4$), die ein Zentrum ($P_o$) hat, besitzt, wobei die simulierten Kameras äquidistant und durch einen gleichen Zwischenkameraabstand b getrennt sind, welcher während einer Aufnahme mit einem konstanten Feldwinkel konstant bleibt, und wobei jede der simulierten Kameras eine Achse aufweist, die durch das Zentrum $P_o$ ihrer simulierten empfindlichen Oberfläche ($E_1...E_4$), durch ihr optisches Zentrum ($O_1...O_4$) sowie durch einen Punkt P, der als simulierter Einstellpunkt bezeichnet wird, welcher sich im wesentlichen in einem gleichen Abstand D' von den simulierten Kameras befindet, geht, wobei die sichtbar zu machende Szene einen nahesten Punkt $P_p$ und einen fernsten Punkt $P_e$ aufweist, wobei die genannte Einrichtung zum Erzeugen von n simulierten Kameras eine Parametrierung derart aufweist, daß einerseits die Entfernung $D_{min}$ zwischen der Gesamtheit der simulierten Kameras und dem nahesten Punkt $P_p$ und andererseits der Zwischenkameraabstand b der Bedingung entspricht, gemäß welcher für die genannte Einstellung und für eine Einstellung, die zwischen dem nahesten Punkt $P_p$ und dem fernsten Punkt $P_e$ variiert, der Winkel $2\alpha$ zwischen den genannten Achsen von zwei benachbarten simulierten Kameras zwischen einem Wert, der höchstens gleich 4,5° für den Punkt $P_p$ ist, und einem Wert, der wenigstens gleich 0,2° für den Punkt $P_e$ ist, variiert;
  - eine Einrichtung für das Sichtbarmachen, in welcher ein Beobachter in der theoretischen Entfernung der "Unifarbe" ein stereoskopisches Paar sieht, das zwei Sichtpunkte enthält, die durch m zwischenliegende Sichtpunkte getrennt sind, wobei m größer oder gleich 1 ist.

14. System gemäß Anspruch 13, dadurch **gekennzeichnet,** daß die Einrichtung zum Erzeugen von n simulierten Kameras eine Parametrierung derart aufweist, daß für eine Szene, die einen im Unendlichen befindlichen Punkt Pe enthält, der Zwischenkameraabstand b derart ist, daß, wenn der Winkel $2\alpha$ einen Wert hat, welcher gleich 0,2° ist, sich der Punkt P der simulierten Einstellung in einem Abstand Dmax befindet, derart, daß sich das Bild eines Objekts, welches sich von dem Abstand Dmax zum Unendlichen längs der Winkelhalbierenden der genannten Achsen von zwei extremen simulierten Kameras ($C_1$, $C_4$) verlagert, auf dem Sichtschirm um eine Entfernung ver-

lagert, die höchstens gleich $n^2$ mal der Teilung der Pixel bzw. Bildpunkte ist.

15. Autostereoskopisches Videosystem, dadurch **gekennzeichnet,** daß es folgendes enthält:

- eine Einrichtung für die Gewinnung von simulierten stereoskopischen Bildern eines Objekts oder einer Szene, das bzw. die sichtbar gemacht werden soll, enthaltend eine Basis von Daten, welche gespeicherte Daten enthalten, die dreidimensionale Informationen von dem Objekt oder der Szene, das bzw. die auf einem Sichtschirm sichtbar gemacht werden soll, enthalten, eine Einrichtung für die Erzeugung von n simulierten Kameras, mit n > 4, von denen jede ein Bild der genannten Szene erzeugt, wobei jede simulierte Kamera ein optisches Zentrum $(O_1...O_4)$ und eine simulierte empfindliche Oberfläche $(E_1...E_4)$, die ein Zentrum $(P_o)$ hat, besitzt, wobei die simulierten Kameras äquidistant und durch einen gleichen Zwischenkameraabstand b getrennt sind, der während einer Aufnahme konstant bleibt, und wobei jede der simulierten Kameras eine Achse aufweist, die durch das Zentrum $(P_o)$ ihrer simulierten empfindlichen Oberfläche $(E_1...E_4)$, durch ihr optisches Zentrum $(O_1...O_4)$ sowie durch einen Punkt P, der als simulierter Einstellpunkt bezeichnet wird, welcher sich im wesentlichen in einem gleichen Abstand D' von den genannten simulierten Kameras befindet, hindurchgeht, wobei die sichtbar zu machende Szene einen nahesten Punkt $P_p$ und einen fernsten Punkt $P_e$ aufweist, und wobei die genannte Einrichtung zum Erzeugen eine Parametrierung derart aufweist, daß einerseits der Abstand $D_{min}$ zwischen den simulierten Kameras und dem nahesten Punkt $P_p$ sowie andererseits der Zwischenkameraabstand b der Bedingung entspricht, gemäß welcher für die genannte Aufnahme und für eine Einstellung, die zwischen dem nahesten Punkt $P_p$ und dem fernsten Punkt $P_e$ variiert, der Winkel $2\alpha$ zwischen den genannten Achsen von zwei benachbarten simulierten Kameras zwischen einem Wert, der höchstens gleich $(18/n)°$ für den Punkt $P_p$ ist, und einem Wert, der wenigstens gleich $(0,8/n)°$ für den Punkt $P_e$ ist, variiert;
- eine Einrichtung für das Sichtbarmachen, in welcher ein Beobachter in der theoretischen Entfernung der "Unifarbe" ein stereoskopisches Paar sieht, das zwei Sichtpunkte enthält, die durch m zwischenliegende Sichtpunkte getrennt sind, wobei m größer oder gleich 1 ist.

16. System gemäß Anspruch 15, dadurch **gekennzeichnet,** daß die Einrichtung zur Erzeugung von n simulierten Kameras eine Parametrierung derart aufweist, daß für eine Szene, die einen sich im Unendlichen befindenden Punkt $P_e$ enthält, der Zwischenkameraabstand b derart ist, daß, wenn der Winkel $2\alpha$ einen Wert hat, der gleich $(0,8/n)°$ ist, sich der Punkt P der simulierten Einstellung in einem Abstand $D_{max}$ befindet, derart, daß sich das Bild eines Objekts, welches sich um die Entfernung Dmax ins Unendliche längs der Winkelhalbierenden der optischen Achsen von zwei extremen simulierten Kameras $(C_1, C_4)$ verlagert, auf dem Sichtschirm um eine Entfernung verlagert, die höchstens gleich $n^2$ mal der Teilung der Pixel bzw. Bildpunkte ist.

17. System gemäß einem der Ansprüche 13 bis 16, dadurch **gekennzeichnet,** daß die genannten Achsen die optischen Achsen der simulierten Kameras sind.

18. System gemäß einem der Ansprüche 13 bis 16, dadurch **gekennzeichnet,** daß die simulierten Kameras ihre simulierten empfindlichen Oberflächen $(E_1...E_4)$ untereinander parallel haben und im wesentlichen in der gleichen Ebene angeordnet sind, und daß es eine Einrichtung für die Verstellbarkeit bzw. das Verstellen bzw. die Dezentrierung der bzw. von simulierten Kameras enthält.

## Claims

1. A method of acquiring simulated autostereoscopic video images of a scene to be viewed, the method being characterized in that, starting from stored data including three-dimensional information about an object or the scene to be viewed on a display screen, it implements $\underline{n}$ simulated cameras, where n ≥ 3, each generating an image of said scene, and each having an optical center (O1, ..., O4) and a simulated sensitive surface (E1, ..., E4) having a center (P0), the simulated cameras being equidistant and spaced-apart by the same inter-camera distance $\underline{b}$ which remains constant while a picture is being taken with a constant field angle, and each of the simulated cameras has an axis passing through the center (P0) of its simulated sensitive surface (E1, ..., E4), through its optical center (O1, ..., O4), and also through a point P referred to as the simulated sharp point, situated substantially at the same distance D' from all of said simulated cameras, in that the scene to be viewed has a nearest point Pp and a farthest point Pe, and in that the inter-camera distance $\underline{b}$ and the distance Dmin between the simulated set of cameras and the nearest point Pp are selected in such a manner that for taking said picture and for a sharp point that varies between the nearest point Pp and the farthest point Pe, the angle 2Â between said axes of two adjacent simulated cameras varies between a value that is not greater than 4.5° for the point Pp and not less than 0.2° for the point Pe.

**2.** A method according to claim 1, characterized in that for a scene including a point Pe situated at infinity, the inter-camera distance $\underline{b}$ is selected so that for the angle $2\hat{A}$ having a value of $0.2°$, the simulated sharp point P is situated at a distance Dmax such that the image of an object moving from the distance Dmax to infinity along the bisector of said axes of two extreme simulated cameras (C1, ..., C4) moves on the display screen through a distance no greater than $n^2$ times the pixel pitch.

**3.** A method of acquiring simulated stereoscopic images of an object or a scene to be viewed, the method being characterized in that starting from stored data including three-dimensional information about the object or the scene to be viewed on a display screen, it implements n simulated cameras, where $n \geq 4$, each generating an image of said scene, and each having an optical center (O1, ..., O4) and a simulated sensitive surface (E1, ..., E4) having a center (P0), the simulated cameras being equidistant and spaced-apart by the same inter-camera distance $\underline{b}$ which remains constant while a picture is being taken, and each of the simulated cameras has an axis passing through the center (P0) of its simulated sensitive surface (E1, ..., E4), through its optical center (O1, ..., O4), and also through a point P referred to as the simulated sharp point, situated substantially at the same distance D' from all of said simulated cameras, in that the scene to be viewed has a nearest point Pp and a farthest point Pe, and in that the inter-camera distance $\underline{b}$ and the distance Dmin between the simulated set of cameras and the nearest point Pp are selected in such a manner that for taking said picture and for a sharp point that varies between the nearest point Pp and the farthest point Pe, the angle $2\hat{A}$ between said axes of two adjacent simulated cameras varies between a value that is not greater than $18°/n$ for the point Pp and not less than $0.8°/n$ for the point Pe.

**4.** A method according to claim 3, characterized in that for a scene including a point Pe situated at infinity, the inter-camera distance $\underline{b}$ is selected so that for the angle $2\hat{A}$ having a value of $0.8°/n$, the simulated sharp point P is situated at a distance Dmax such that the image of an object moving from the distance Dmax to infinity along the bisector of said axes of two extreme simulated cameras (C1, ..., C4) moves on the display screen through a distance no greater than $n^2$ times the pixel pitch.

**5.** A method according to any preceding claim, characterized in that said axes are the optical axes of the simulated cameras.

**6.** A method according to any one of claims 1 to 4, characterized in that the simulated cameras have their simulated sensitive surfaces (E1 ..., E4) parallel to one another and disposed substantially in a common plane, and in that the stereoscopic base $\underline{b}$ is obtained by off-centering (d1, ..., d4).

**7.** A method according to any preceding claim, characterized in that the simulated cameras (C1, ..., C4) are of the pinhole type.

**8.** A method according to any preceding claim, characterized in that each image point of the simulated camera is associated with vertical resolution equal to the nominal vertical resolution of the video image and horizontal resolution equal to 1/nth the nominal horizontal resolution of the video image.

**9.** A method according to any preceding claim, characterized in that it includes a step of interleaving P columns of $\underline{n}$ elementary images to obtain an interleaved autostereoscopic video image having n À p columns.

**10.** A method according to any preceding claim, characterized in that it includes a step of changing the apparent size of an object or of a scene without disturbing its shape starting from focusing at said distance D' by displacing the simulated cameras without changing the sharp point (P), the angle $2\hat{A}$ being kept constant, and the value of the inter-camera distance $\underline{b}$ being changed in proportion to the change in the focusing distance.

**11.** A method according to any preceding claim, characterized in that the image includes stereoscopic pairs having a given stereoscopic base B, the viewpoints of said stereoscopic pair being separated by m intermediate viewpoints, where $\underline{m}$ is an integer > 1.

**12.** A method according to claim 11, characterized in that it includes a step of viewing under conditions where, at the ideal, "solid color" distance, an observer sees one of said stereoscopic pairs having viewpoints that are separated by $\underline{m}$ elementary viewpoints.

**13.** An autostereoscopic video system characterized in that it comprises:

- apparatus for acquiring simulated autostereoscopic video images of a scene to be viewed, the apparatus comprising a database containing stored data including three-dimensional information about an object or the scene to be viewed on a display screen, apparatus for generating $\underline{n}$ simulated cameras, where $n \geq 3$, each generating an image of said scene and each having an optical center and a simulated sensitive surface (E1, ..., E4) having a center (P0), the simulated cameras being equidistant and spaced-apart by a common inter-camera distance $\underline{b}$ which remains constant while taking pictures with a constant field angle, and each of the simulated cameras has an axis passing through the center (P0) of its simulated sensitive surface (E1 ..., E4), through its optical center (O1, ..., O4), and through a point P referred to as the "simulated sharp point" situated substantially at the same distance D' from all of said simulated cameras, the scene to be viewed having a nearest point Pp and a farthest point Pe, said apparatus for generating $\underline{n}$ simulated cameras being set up so that the inter-camera distance $\underline{b}$ and the distance Dmin between the set of simulated cameras and the nearest point Pp satisfies the condition whereby, for said picture and for focusing varying between the nearest point Pp and the first point Pe, the angle 2Â between said axes of two adjacent simulated cameras varies between a value not greater than 4.5° for the point Pp and a value not less than 0.2° for the point Pe; and
- display apparatus in which an observer at the ideal, "solid color" distance sees a stereoscopic pair comprising two viewpoints separated by $\underline{m}$ intermediate viewpoints where $\underline{m}$ is greater than or equal to 1.

14. A system according to claim 13, characterized in that the apparatus for generating $\underline{n}$ simulated camera is set up so that, for a scene having a point Pe situated at infinity, the inter-camera distance $\underline{b}$ is such that for the angle 2Â having a value equal to 0.2°, the simulated sharp point P is situated at a distance Dmax such that the image of an object from the distance Dmax to infinity along the bisector of said axes of the two extreme simulated cameras (C1, ..., C4) moves on the display screen through a distance no greater than $n^2$ times the pixel pitch.

15. An autostereoscopic video system characterized in that it comprises:

- apparatus for acquiring simulated stereoscopic video images of an object or of a scene to be viewed, the apparatus comprising a database containing stored data including three-dimensional information about the object or the scene to be viewed on a display screen, apparatus for generating n simulated cameras, where $n > 4$, each generating an image of said scene and each having an optical center (O1, ..., O4) and a simulated sensitive surface (E1 ..., E4) having a center (P0), the simulated cameras being equidistant and spaced-apart by a common inter-camera distance $\underline{b}$ which remains constant while taking pictures, and each of the simulated cameras has an axis passing through the center (P0) of its simulated sensitive surface (E1, ..., E4), through its optical center (O1, ..., O4), and through a point P referred to as the "simulated sharp point" situated substantially at the same distance D' from all of said simulated cameras, the scene to be viewed having a nearest point Pp and a farthest point Pe, said apparatus for generating $\underline{n}$ simulated cameras being set up so that the inter-camera distance $\underline{b}$ and the distance Dmin between the set of simulated cameras and the nearest point Pp satisfies the condition whereby, for said picture and for focusing varying between the nearest point Pp and the first point Pe, the angle 2Â between said axes of two adjacent simulated cameras varies between a value not greater than 18°/n for the point Pp and a value not less than 0.8°/n for the point Pe; and
- display apparatus in which an observer at the ideal, "solid color" distance sees a stereoscopic pair comprising two viewpoints separated by $\underline{m}$ intermediate viewpoints where $\underline{m}$ is greater than or equal to 1.

16. A system according to claim 15, characterized in that the apparatus for generating $\underline{n}$ simulated camera is set up so that, for a scene having a point Pe situated at infinity, the inter-camera distance $\underline{b}$ is such that for the angle 2Â having a value equal to 0.8°/n, the simulated sharp point P is situated at a distance Dmax such that the image of an object from the distance Dmax to infinity along the bisector of said axes of the two extreme simulated cameras (C1, ..., C4) moves on the display screen through a distance no greater than $n^2$ times the pixel pitch.

17. A system according to any one of claims 13 to 16, characterized in that said axes are the optical axes of the simulated cameras.

18. A system according to any one of claims 13 to 16, characterized in that the simulated cameras have their simulated sensitive surfaces (E1, ..., E4) parallel to one another and disposed substantially in a common plane, and in that it includes apparatus for off-centering the simulated cameras.

$OP = D$

$OP_p = D_{min}$

$O_1O_2 = O_2O_3 = O_3O_4 = b$

**FIG.6**

**FIG.1**

**FIG.5**

$O_1 P = O_2 P = D'$

FIG.2a

FIG.2b

FIG.3a

FIG.3b

FIG.4a

FIG.4b

FIG.4c

FIG.4d